(19)

**Europäisches Patentamt**

**European Patent Office**

**Office européen des brevets**

(11) **EP 1 109 131 A2**

(12) ## EUROPEAN PATENT APPLICATION

(43) Date of publication:
**20.06.2001 Bulletin 2001/25**

(51) Int Cl.⁷: **G06T 7/00**

(21) Application number: **00310509.5**

(22) Date of filing: **27.11.2000**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **17.12.1999 GB 9929957**

(71) Applicant: **CANON KABUSHIKI KAISHA
Tokyo (JP)**

(72) Inventors:
• **Wiles, Charles Stephen
Guildford, Surrey GU2 5NZ (GB)**

• **Baumberg, Adam,
c/o Canon Res. Center Europe Ltd.
Guildford, Surrey GU2 5YJ (GB)**
• **Taylor, Richard Ian,
c/o Canon Res. C. Europe Ltd.
Guildford, Surrey GU2 5YJ (GB)**
• **Lyons, Alexander R.,
c/o Canon Res. C. Europe Ltd.
Guildford, Surrey GU2 5YJ (GB)**

(74) Representative:
**Beresford, Keith Denis Lewis et al
BERESFORD & Co.
High Holborn
2-5 Warwick Court
London WC1R 5DJ (GB)**

(54) **Image processing apparatus**

(57) In an apparatus and method for creating a computer representation of a three-dimensional surface of an object, the viewing cones for the camera positions at which images of the object were taken are determined and the intersection of these viewing cones is used to define an initial three-dimensional space within which the object surface lies. This initial space is divided into voxels and each non-occluded voxel is checked for photoconsistency by comparing the colours (or average colours) of the pixel patches in the various images to which that voxel can be projected. Any voxels which are photo-inconsistent are removed. A voxel may be determined to be photo-inconsistent if the average colours of the pixel patches are different. Where the average colours of the pixel patches are different, further processing may be carried out before a voxel is discarded. Thus, such a voxel may be divided into subsidiary voxels each of which is projected into a pixel region in each of the images and the voxel only removed if there exists no set of pixel regions consisting of a pixel region taken from each image which is photoconsistent. In an alternative, the pixels of the pixel patches are each allocated to a specific one of a number of colour value ranges and a voxel is only determined to be photo-inconsistent if the pixel patches do not share at least one colour value range. The steps of projecting the voxels into the images and removing photo-inconsistent voxels are repeated until all non-occluded voxels are photoconsistent, there-by generating a three-dimensional computer representation of the three-dimensional object surface. The resulting voxel space may be stored together with the colour of each non-occluded voxel and the colour of the pixel patch into which each voxel projects in a further image compared with the stored colour for that voxel and any photo-inconsistent voxels removed. This process can then be repeated for a succession of further images. In another arrangement each further image may be compared with a sub-set of the first set to determine the photoconsistency of the voxels.

FIG. 10a

EP 1 109 131 A2

**Description**

This invention relates to an image processing apparatus and method, in particular, this invention relates to an image processing apparatus and method for use in the creation of a three-dimensional computer model of a real-life object from two-dimensional image data representing different views of the object to be modelled. Generally, this image data will consist of a set of still images or video frames recorded at different relative orientations or positions of the object and the recording camera.

In order to create the three-dimensional computer model, a three-dimensional object surface is generated from the set of image data and data defining the relative positions or orientations at which each of the images was recorded.

One known way of generating a three-dimensional object surface from the image data is to use a technique known as "voxel carving" which is described in detail in a paper entitled "Rapid Octree Construction from Image Sequences" by Richard Szeliski published in CVGIP: Image Understanding Vol. 58, No. 1, July 1993 at pages 23-32. In this method, a number of images of the object whose three-dimensional surface is to be modelled are produced such that each image shows a silhouette of the object surrounded by a background. The relative orientation between the object and the camera position at which each image was taken together with characteristics of the camera (such as focal length and the size of the image aperture) are used to determine the relative location and orientation of each image relative to a model volume or space which is divided into subsidiary volume elements or voxels to form a voxel space. Each non-occluded voxel is then projected into the images. Voxels that project into background portions of the images are removed from the voxel space. This procedure continues until no background voxels remain. At this stage, the surface voxels of the voxel space should define the outline or silhouette of the object shown in the images.

Although the above-described technique works satisfactorily where there is a well-defined boundary between the object and the background in the image, difficulties can arise where the boundary between the object and the background is ill-defined or difficult to distinguish because, for example, there is insufficient distinction in colour or brightness between the background and object pixels in the images. In practice, the above-described technique works well only when the conditions under which the images are acquired are well-controlled so that there is a clearly distinguishable boundary between the edge of the object and the background in each image.

Another technique for generating a three-dimensional object surface from images that does not rely on being able to separate each image into object and background pixels but rather uses colour consistency between the images is described in the University of Rochester Computer Sciences Technical Report No. 680 of January 1998 entitled "What Do N Photographs Tell Us About 3D Shape?" and a University of Rochester Computer Sciences Technical Report No. 692 of May 1998 entitled "A Theory of Shape by Space Carving", both by Kiriakos N. Kutulakos and Stephen M. Seitz. The technique described in these two papers is known as "space carving" or "voxel colouring". This technique relies on the fact that the viewpoint of each image or photograph is known in a common 3D world reference frame and that scene radiance follows a known, locally computable radiance function, that is so that effects such as shadows, transparencies and inter-reflections can be ignored. In this technique, the three-dimensional model space is again divided into voxels. A non-occluded voxel is then projected into each image in turn. The colour of the patch of pixels to which the voxel projects is determined for each image. If the colours are different or not consistent, then it is determined that that voxel does not form part of the 3D object's surface and that voxel is removed or discarded. Each non-occluded voxel is visited in turn and the process is repeated until the remaining non-occluded voxels are all photo or colour consistent.

The initial voxel space needs to be defined relative to the object. If the initial voxel space is too large, then a large number of computations and a large number of voxels will need to be removed until the final 3D object surface is generated.

One way to ensure that the initial voxel space is not too large is described in the aforementioned University of Rochester Computer Sciences Technical Reports. This method involves first identifying background pixels in each image and then restricting the voxel space to, for each image, a cone defined by the position and/or orientation at which the image was taken of the object and the identified non-background pixels in the image. Thus, in this method the initial voxel space is defined as the intersection of cones each projecting from the effective focal point of a corresponding image through the boundary or silhouette of the object in that image. This technique for defining the initial voxel volume therefore requires that the boundary be identified between the object and the background pixels in each image as described in the aforementioned paper by Richard Szeliski. Where the boundary between the object and the background is well-defined and precise, then this technique should not cause any problems in the generation of the three-dimensional object surface, although it will increase the amount of computation required to arrive at the three-dimensional object surface. However, where the boundary between the object and the background in each image is not well-defined and identifiable, then errors may arise in definition of that boundary so that, for example, the initial voxel space does not include all of the voxels that project into the object in the images. This can cause severe problems in the subsequent generation of the three-dimensional object surface. The reason for this is that, if the boundary erroneously excludes object voxels, then the relative relationship between voxels in the initial voxel space will be incorrect and voxels that should have been occluded by other voxels may not be occluded, and vice versa. Where a voxel that should have been occluded is not occluded, then the subsequent colour or photoconsistency check described above will almost certainly result in that voxel being determined to be photo-inconsistent, so resulting in the erroneous removal of that voxel. This erroneous voxel removal will compound the error discussed above and may itself result in one or more other voxels being erroneously removed and so on. Indeed, this initial error in definition of the voxel space may lead to a catastrophic failure in that so many voxels may be erroneously removed that it is not possible to generate the 3D object's surface.

The above described voxel colouring or space carving technique also relies on the individual pixel patches being formed of pixels of the same or very similar colours. If there is a variation in colour between the pixels of a pixel patch, then the photoconsistency check may not provide accurate results and it is possible that a voxel that actually forms part of the required 3D object surface (an 'object voxel') may be erroneously removed. The erroneous removal of that voxel may have knock-on effects so that further object voxels are erroneously removed. This erroneous removal may, in turn, cause erroneous removal of further voxels. The erroneous removal of a single voxel may, in certain cases, effectively cause a cascade or chain reaction and may cause the voxel colouring process to fail, that is it may be impossible to provide a 3D model of the object surface because too many (possibly even all) of the object voxels may be removed.

In the above described space carving or voxel colouring process, each voxel in turn is projected into each of the images in which it is visible. Because of the computational power and time required, it is generally not possible to carry out this process using more than 20-30 images. Depending upon the nature of the object whose three dimensional surface is to be modelled, this number of images may be insufficient to provide a realistic 3D model of the object surface.

In this known voxel colouring technique, if a voxel that actually forms part of the required 3D object surface is erroneously removed (because, for example, of shadows or highlights affecting the colours in the images), then the removal of that voxel may have knock-on effects so that further object voxels are erroneously removed. This erroneous removal may, in turn, cause erroneous removal of further voxels. The erroneous removal of a single voxel may, in certain cases, effectively cause a cascade or chain reaction and may cause the voxel colouring process to fail, that is it may be impossible to provide a 3D model of the object surface because too many (possibly even all) of the object voxels may be removed.

It is an aim of the present invention to provide image processing apparatus and a method of operating such image processing apparatus that enable the initial voxel space for a voxel colouring or space carving technique to be defined so as to avoid excessive computation whilst also avoiding or at least reducing the possibility of erroneous voxel removal.

In one aspect, the present invention provides image processing apparatus having processing means operable to define an initial voxel space from which a three-dimensional object surface is to be generated by defining the initial voxel space as the volume bounded by the intersection of a number of cones with each cone having its apex at a respective one of the focal points and having its surface defined by lines extending from the focal point through the boundary of the corresponding camera aperture or imaging area for a respective one of the images from which the three-dimensional object surface is to be generated. This avoids an arbitrary definition of the initial voxel space and enables the initial voxel space to be precisely defined while ensuring that all object voxels (that is voxels that project into the object in the images) are within the initial voxel space so as to avoid or at least reduce the possibility of catastrophic failure mentioned above.

It is an aim of the present invention to provide image processing apparatus and a method of operating such image processing apparatus that avoids or at least mitigates or reduces the possibility of erroneous removal of a voxel.

In one aspect, the present invention provides image processing apparatus having processing means operable to test whether a voxel forms part of a 3D object, the processing means being arranged, where it cannot determine whether a voxel forms part of the 3D object surface, to sub-divide that voxel into subsidiary voxels and to repeat the test for each of the subsidiary voxels. If desired, this sub-division may be continued until each subsidiary voxel projects only into a single pixel in each image. Such apparatus embodying the present invention should enable a more accurate determination of the 3D object surface even where there is significant colour variation within a pixel patch into which a voxel projects.

It is an aim of the present invention to provide image processing apparatus and a method of operating such image processing apparatus that enable the number of images of an object used during a voxel colouring process to be increased so as to enable a more precise 3D object surface to be generated without excessively increasing the amount of computational power and time required for the process.

It is an aim of the present invention to provide image processing apparatus and a method of operating such image processing image apparatus that enable recovery of a voxel colouring process from potential catastrophic failure without necessarily having to completely restart the voxel colouring process.

In one aspect, the present invention provides image processing apparatus having processing means operable to determine, using a first set of image data, the photoconsistency of non-occluded voxels of an initial voxel space to provide a first 3D object surface and then to refine that first 3D object surface by checking the photoconsistency of non-occluded voxels of that first 3D object surface against image data for one or more further images.

In one aspect, the present invention provides image processing apparatus having processing means operable to provide a 3D model of a surface of a 3D object by checking the photoconsistency of non-occluded voxels of an initial voxel space for a first set of image data, storing the results of that check as a first 3D object surface and then refining the first 3D object surface by checking the photoconsistency of non-occluded voxels using one or more further images of the object and one or more of the images used to produce the first 3D object surface.

In either of the above described aspects, the processing means may be operable to repeat the refinement one or more further times adding one or more further images each time.

In one aspect, the present invention provides image processing apparatus having processing means operable to provide a model of a 3D object surface by checking the photoconsistency of voxels of a voxel space using images of the object, and then to repeat that process using further images so as to further refine the 3D object surface model until a final 3D object surface model is produced, whereby the processing means is operable to use at least one additional image in each photoconsistency check and to store the 3D object surface generated by at least one of the previous photoconsistency checks before carrying out the next photoconsistency check so that, if the next photoconsistency check results in the erroneous removal of one or more object voxels, the processing means can return to the results of the stored previous photoconsistency check.

In one aspect, the present invention provides image processing apparatus having processing means operable to provide a model of a 3D object surface by checking the photoconsistency of voxels of a voxel space using images of the object, and then to repeat that process using further images so as to further refine the 3D object surface model until a final 3D object surface model is produced, the processing means also being operable to store the image data for one or more of the images previously used for a photoconsistency check and to discard the oldest of the stored images and replace it with the newest used image each time the photoconsistency check is repeated so that the processing means is operable to store a running set of images thereby enabling a photoconsistency check to be carried out using the stored images together with a newly added image so that the processing means has available the raw image data for each of the stored images and not simply the 3D object surface that resulted from the previous photoconsistency check. This should enable, for example, restoration of inadvertently removed voxels when the addition of new image data causes the processing means to conclude that a voxel is in fact an object voxel when a previous photoconsistency check determined that that voxel was inconsistent.

Embodiments of the present invention will now be described, by way of example only, with reference to the accompanying drawings, in which:

Figure 1 shows schematically the components of a modular system in which the present invention may be embodied;

Figure 2 shows a block diagram of processing apparatus for putting into effect one or more of the modules shown in Figure 1;

Figure 3 shows a top level flowchart for illustrating generation of a three-dimensional object surface using the processing apparatus shown in Figure 2;

Figure 4 shows a flowchart for illustrating the step shown in Figure 3 of defining an initial voxel space;

Figure 5 shows a flowchart illustrating in greater detail the step of determining the viewing cones for each camera position shown in Figure 4;

Figure 6 shows a flowchart illustrating in greater detail the step of determining the viewing cone for each camera position shown in Figure 4;

Figure 7 shows in greater detail the step shown in Figure 4 of defining voxels within the initial voxel space;

Figures 8 and 9 are schematic representations for illustrating a camera arrangement and the associated initial voxel space with Figure 9 being a side elevational view (with the front camera omitted in the interests of clarity) and Figure 8 showing a cross-sectional view taken along the lines VIII-VIII in Figure 9;

Figures 10a and 10b show diagrammatic perspective views to illustrate division of two different initial voxel spaces into voxels;

Figure 11 shows a part-sectional perspective view of part of the voxel space shown in Figure 10a so as to illustrate more clearly the division of the voxel space into voxels;

Figure 12 shows a flowchart for illustrating in greater detail a method of carrying out the step shown in Figure 3 of determining the voxels defining the three-dimensional object surface;

Figure 13 shows schematically the projection of a voxel onto part of an image;

Figures 14a to 14d show flowcharts illustrating in greater detail steps carried out in a method of carrying out step S21 of Figure 12;

Figure 15 shows a flowchart for illustrating one way of carrying out the further processing step shown in Figure 14a;

Figure 16 shows a diagrammatic representation of a portion of the part of the image shown diagrammatically in Figure 13 to illustrate a pixel patch formed by projection of a subsidiary voxel into the image;

Figure 17 shows a flowchart for illustrating another way of carrying out the additional processing step shown in Figure 12a;

Figure 18 shows a flowchart for illustrating another method of carrying out a voxel colouring process;

Figure 19 illustrates diagrammatically one form of colour space;

Figure 20 illustrates a plane of the colour space shown in Figure 19;

Figure 21 shows a flowchart illustrating in greater detail another way of carrying out the step S2 in Figure 3 of determining the voxels defining the 3D object surface;

Figures 22a and 22b show a flowchart illustrating in greater detail the step of performing a voxel colouring process using a current voxel space and a new image shown in Figure 21;

Figure 23 shows a flowchart illustrating another way of carrying out step S2 in Figure 3;

Figures 24a and 24b show a flowchart illustrating in greater detail the step of performing a voxel colouring process using a current voxel space and a new set of images shown in Figure 23; and

Figure 25 shows a very schematic view similar to Figure 8 for use in explaining the effect of adding further images.

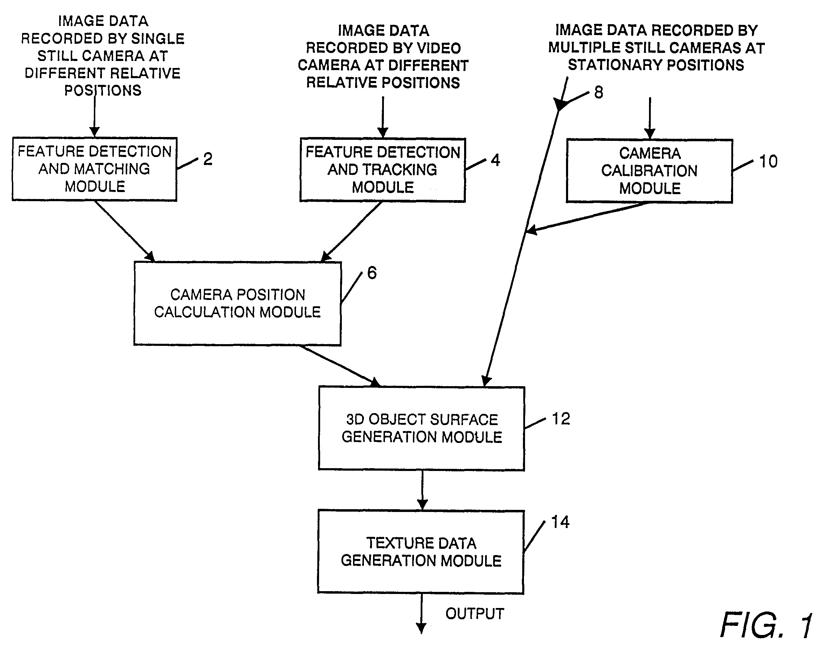

Figure 1 schematically shows the components of a modular system in which the present invention may be embodied.

These components can be effected as processor-implemented instructions, hardware or a combination thereof.

Referring to Figure 1, the components are arranged to process data defining images (still or moving) of one or more objects in order to generate data defining a three-dimensional computer model of the object(s).

The input image data may be received in a variety of ways, such as directly from one or more digital cameras, via a storage device such as a disk or CD ROM, by digitisation of photographs using a scanner, or by downloading image data from a database, for example via a datalink such as the Internet, etc.

The generated 3D model data may be used to: display an image of the object(s) from a desired viewing position; control manufacturing equipment to manufacture a model of the object(s), for example by controlling cutting apparatus to cut material to the appropriate dimensions; perform processing to recognise the object(s), for example by comparing it to data stored in a database; carry out processing to measure the object(s), for example by taking absolute measurements to record the size of the object(s), or by comparing the model with models of the object(s) previously generated to determine changes therebetween; carry out processing so as to control a robot to navigate around the object(s); store information in a geographic information system (GIS) or other topographic database; or transmit the object data representing the model to a remote processing device for any such processing, either on a storage device or as a signal (for example, the data may be transmitted in virtual reality modelling language (VRML) format over the Internet, enabling it to be processed by a WWW browser); etc.

The feature detection and matching module 2 is arranged to receive image data recorded by a still camera from different positions relative to the object(s) (the different positions being achieved by moving the camera and/or the object(s)). The received data is then processed in order to match features within the different images (that is, to identify points in the images which correspond to the same physical point on the object(s)).

The feature detection and tracking module 4 is arranged to receive image data recorded by a video camera as the relative positions of the camera and object(s) are changed (by moving the video camera and/or the object(s)). As in the feature detection and matching module 2, the feature detection and tracking module 4 detects features, such as corners, in the images. However, the feature detection and tracking module 4 then tracks the detected features between frames of image data in order to determine the positions of the features in other images.

The camera position calculation module 6 is arranged to use the features matched across images by the feature detection and matching module 2 or the feature detection and tracking module 4 to calculate the transformation between the camera positions at which the images were recorded and hence determine the orientation and position of the camera focal plane when each image was recorded.

The feature detection and matching module 2 and the camera position calculation module 6 may be arranged to perform processing in an iterative manner. That is, using camera positions and orientations calculated by the camera position calculation module 6, the feature detection and matching module 2 may detect and match further features in the images using epipolar geometry in a conventional manner, and the further matched features may then be used by the camera position calculation module 6 to recalculate the camera positions and orientations.

If the positions at which the images were recorded are already known, then, as indicated by arrow 8 in Figure 1, the image data need not be processed by the feature detection and matching module 2, the feature detection and tracking module 4, or the camera position calculation module 6. For example, the images may be recorded by mounting a number of cameras on a calibrated rig arranged to hold the cameras in known positions relative to the object(s).

Alternatively, it is possible to determine the positions of a plurality of cameras relative to the object(s) by adding calibration markers to the object(s) and calculating the positions of the cameras from the positions of the calibration markers in images recorded by the cameras. The calibration markers may comprise patterns of light projected onto the object(s). Camera calibration module 10 is therefore provided to receive image data from a plurality of cameras at fixed positions showing the object(s) together with calibration markers, and to process the data to determine the positions of the cameras. A preferred method of calculating the positions of the cameras (and also internal parameters of each camera, such as the focal length etc) is described in a paper entitled "Calibrating and 3D Modelling with a Multi-Camera System" by Wiles and Davison published in 1999 IEEE Workshop on Multi-View Modelling Analysis of Visual Scenes, ISBN 0769501109.

The 3D object surface generation module 12 is arranged to receive image data showing the object(s) and data defining the positions at which the images were recorded, and to process the data to generate a 3D computer model representing the actual surface(s) of the object(s), such as a polygon mesh model.

The texture data generation module 14 is arranged to generate texture data for rendering onto the surface model produced by the 3D object surface generation module 12. The texture data is generated from the input image data showing the object(s).

Techniques that can be used to perform the processing in the modules shown in Figure 1 are described in EP-A-0898245, EP-A-0901105, pending US applications 09/129077, 09/129079 and 09/129080, the full contents of which are incorporated herein by cross-reference, and also the attached Annex.

The present invention may be embodied in particular as part of the 3D object surface generation module 12.

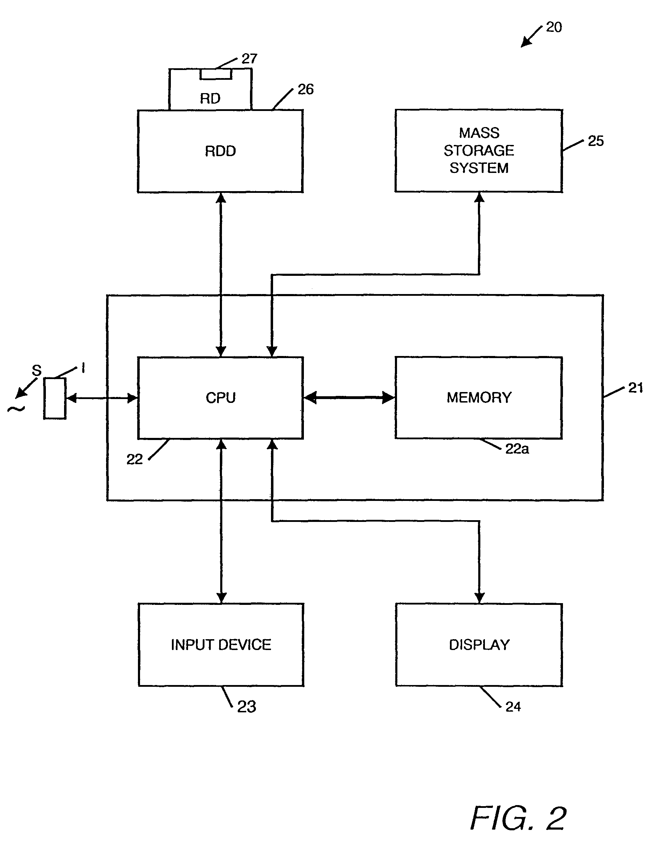

Figure 2 shows a block diagram of processing apparatus 20.

The processing apparatus 20 comprises a main processing unit 21 having a central processing unit (CPU) 22 with associated memory (ROM and/or RAM) 22a. The CPU 22 is coupled to an input device 23 (which may consist, in known manner, of a keyboard and a pointing device such as a mouse), a display 24, a mass-storage system 25 such as a hard disc drive, and a removable disc drive (RDD) 26 for receiving a removable disc (RD) 27. The removable disc drive 26 may be arranged to receive removable disc 27 such as a floppy disc, a CD ROM or a writable CD ROM. The CPU 22 may also be coupled to an interface I for receiving signals S carrying processor implementable instructions and/or data. The interface may comprise, for example, a connection to a network such as the Internet, an intranet, a LAN (local area network) or a WAN (wide area network) or may comprise a data link to another processing apparatus, for example an infrared link.

The processing apparatus 20 is configured to form the 3D object surface generation module 12 shown in Figure 1 by means of processor implementable instructions and/or data stored in the memory 22a. Processor implementable instructions and/or data stored in the memory may also configure the apparatus to form any one or more of the other modules shown in Figure 1. These processor implementable instructions and/or data may be prestored in the memory 22a or may be supplied to the main processing unit 21 as a signal S via the interface I or on a removable disc 27 or may be supplied to the main processing unit 21 by any combination of these techniques.

3D object surface data resulting from use of the processing apparatus 20 in a manner to be described below may be stored in the mass-storage system 25 and may also be displayed on the display 24. The 3D object surface data may also be downloaded to a removable disc 27 or supplied as a signal S via the interface I. The 3D object surface data may be subsequently processed by the processing apparatus 20 when configured to operate as the texture data generation module 14 shown in Figure 1. Such further processing may, however, be carried out by another processing apparatus which receives the 3D object surface data via, for example, a removable disc 27 or as a signal S from the processing apparatus 20 shown in Figure 2.

Operation of the processing apparatus 20 shown in Figure 2 to generate a three-dimensional object surface will now be described.

The data necessary to enable generation of the 3D object surface will have been obtained as described above with reference to Figure 1 and will already be stored in the mass-storage system 25 for access by the CPU 22. This data includes image data for each of the images of the object to be used to generate the 3D object surface.

Each of the images is stored in the mass-storage system 25 as an array of pixel values with each pixel of each image being allocated a number identifying the colour of that pixel. Typically, for grey shades the number will be between 0 and 255 giving a possibility of 256 grey shades while for full colour the number will be between 0 and 255 for each primary colour (generally red, green and blue).

The image data is accompanied by camera data representing the relative position and orientation with respect to the object of the camera positions at which the image was obtained and internal parameters of the camera or cameras such as the focal length and the dimensions of the imaging area or viewing window of the camera(s). This camera data may be obtained in the manner described above with reference to modules 2 and 6 in Figure 1 or modules 4 and 6 in Figure 1, or module 10 in Figure 1 or, as indicated by the arrow 8 in Figure 1, the position and relative orientation data may be obtained directly from known camera positions. The camera internal parameters may be prestored in the apparatus, input by the user using the input device 23 or determined as described in the aforementioned paper by Wiles and Davison (ISBN 0769501109).

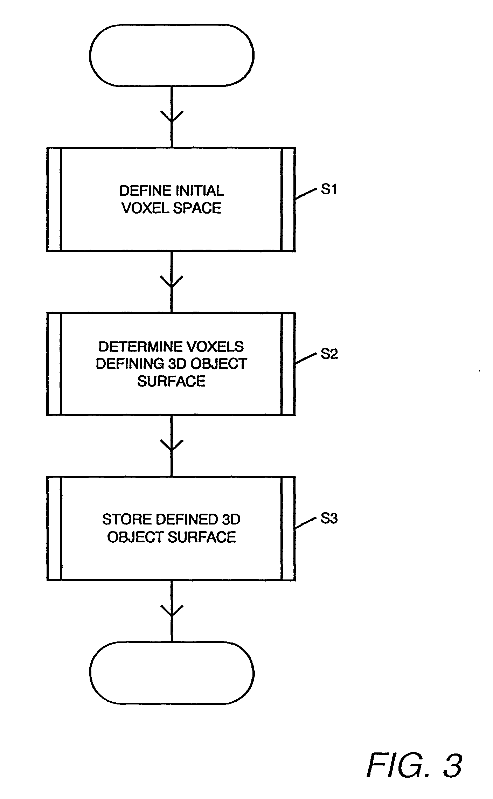

Figure 3 shows a top level flowchart for illustrating generation of the 3D object surface from this data. At step S1, an initial voxel space containing the required 3D object surface is defined by the CPU 22.

Once the initial voxel space has been defined, then the photoconsistency of each non-occluded voxel is checked in turn to determine the voxels defining the 3D object surface at step S2. The defined 3D object surface is then stored at step S3.

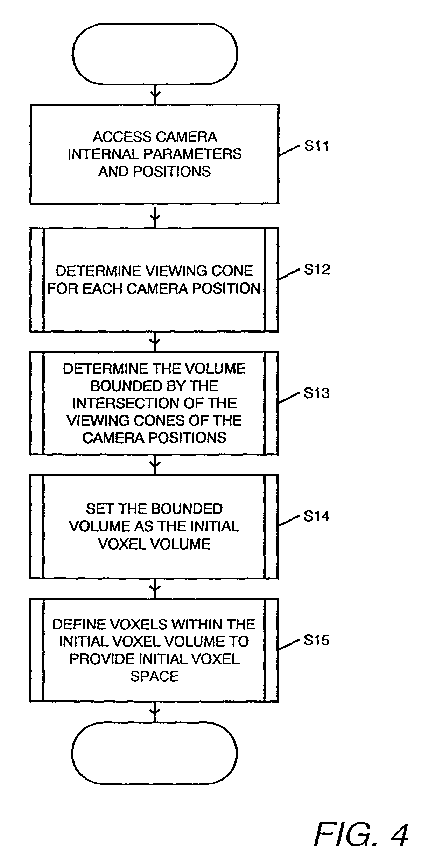

Step S1 of Figure 3 will now be described in more detail with reference to the flowchart shown in Figure 4. At step S11, the CPU 22 accesses the camera internal parameters and position data stored in the mass-storage system 25 (Figure 2). At step S12, the CPU 22 determines, using the camera internal parameters and positions, the viewing cone for each camera position.

At step S13 the CPU 22 determines the volume bounded by the intersection of the viewing cones of the camera positions, at step S14 the CPU 22 sets the bounded volume as the initial voxel volume and at step S15 the CPU 22 sub-divides the initial voxel space into cubic or right-parallelopipedal voxels arranged in a cubic, close-packed array so as to form the initial voxel space.

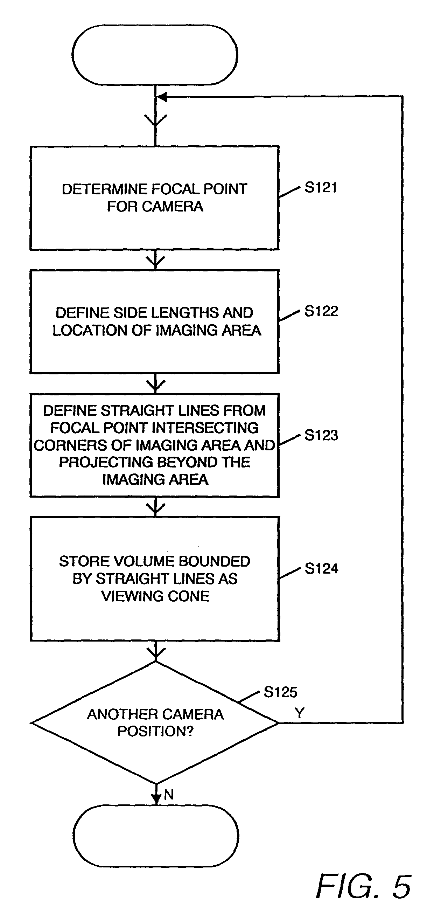

Figure 5 shows a flowchart illustrating in greater detail step S12 of Figure 4. At step S121, the CPU 22 determines from the data stored in the mass-storage system 25, the focal point of the camera for the camera position for a first one of the stored images. At step S122, the CPU 22 determines from the camera data stored in the mass-storage system the side lengths and location in three dimensional space of the imaging area relative to the focal point. At step S123, the CPU defines rectilinear straight lines projecting from the determined focal point and each passing through and projecting beyond a respective different one of the corners of the imaging area. At step S124, the CPU stores the volume bounded by the straight lines as the viewing cone by storing the relative orientations of the straight lines. At step S125, the CPU 22 determines whether the viewing cone for another camera position needs to be determined. If the answer is yes, then the CPU 22 repeats steps S121 to S125 until the answer at step S125 is no when the CPU 22 proceeds to step S13 in Figure 4.

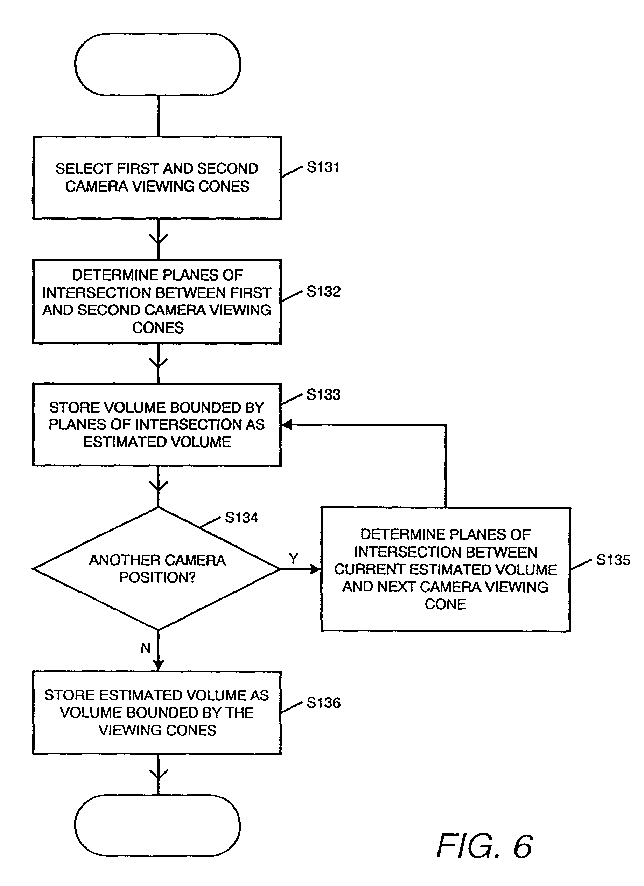

Figure 6 shows a flowchart illustrating in greater detail step S13 shown in Figure 4. At step S131, the CPU 22 selects the stored data representing the viewing cones of first and second ones of the camera positions. At step S132, the CPU 22 determines the planes of intersection between the first and second camera viewing cones using the stored data representing the straight lines defining the viewing cones. At step S133, the CPU 22 stores the volume bounded by the planes of intersection of the viewing cones as an estimated volume. At step S134, the CPU checks to see whether there is another camera position whose viewing cone intersection has not yet been determined. If the answer at step S134 is yes, then the CPU determines at step S135 the planes of intersection between the current estimated volume and the next camera position viewing cone and then stores the volume bounded by those planes of intersection as the new estimated volume at step S133. Steps S134, S135 and S133 are repeated until the answer at step S134 is no at which point the CPU stores the estimated volume as the volume bounded by the camera viewing cones at step S136 and returns to step S14 in Figure 4 at which the bounded volume is set as the initial voxel volume.

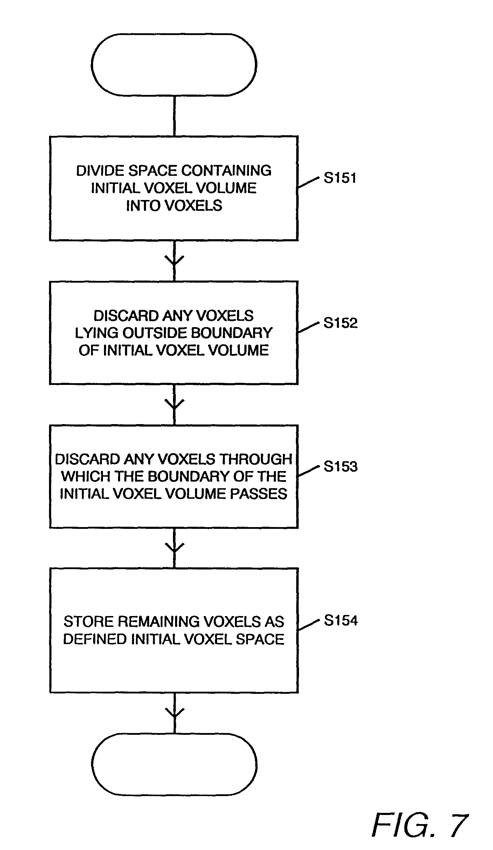

Figure 7 shows a flowchart illustrating in greater detail step S15 of Figure 4. At step S151, the CPU 22 divides a volume or space containing the initial voxel space into cubic or right-parallelopipedal voxels arranged in a close-packed array. The CPU 22 then discards at step S152 any voxels lying outside the boundary of the determined initial voxel volume. At step S153, the CPU 22 discards any voxels through which the boundary of the initial voxel volume passes and at step S154 stores the remaining voxels as the initial voxel space.

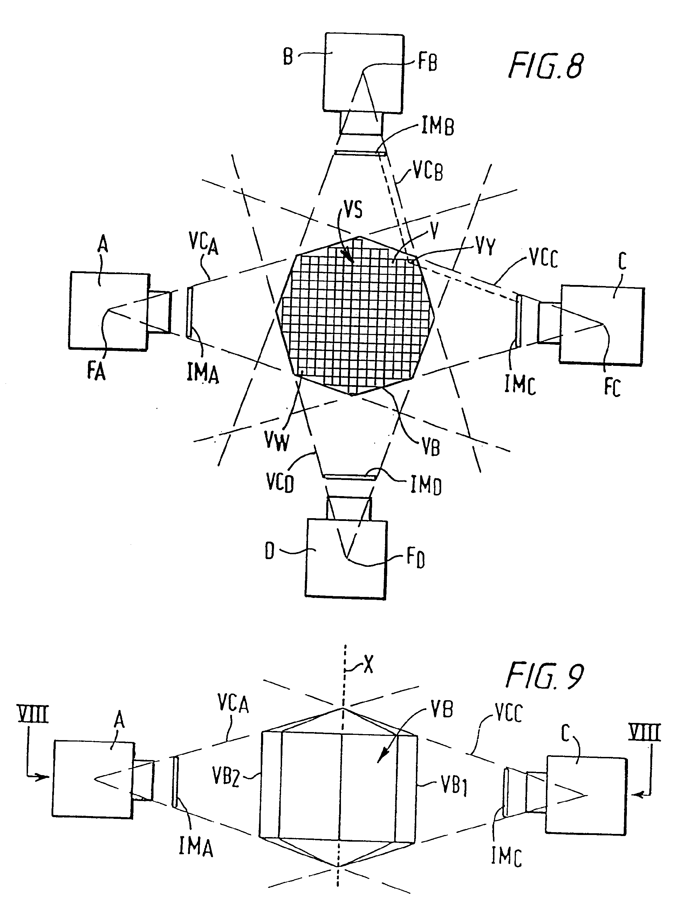

Figures 8 and 9 show one example of a camera position arrangement to illustrate an example of an initial voxel space derived in the manner described above.

In the example shown in Figures 8 and 9, the camera position arrangement consists of four camera positions A to D arranged in a single plane (the plane of the paper of Figure 8 in this example) and spaced apart by an angle of 90° relative to one another about a central axis X indicated by the dotted line in Figure 9.

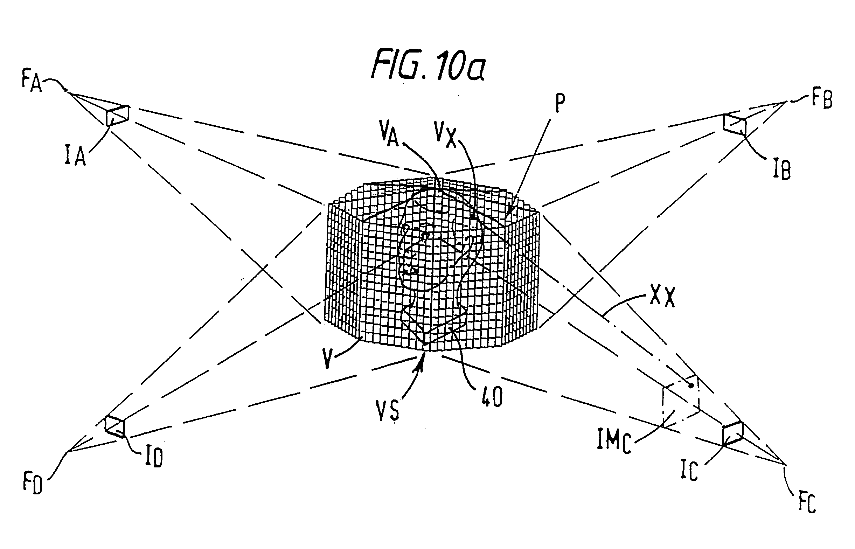

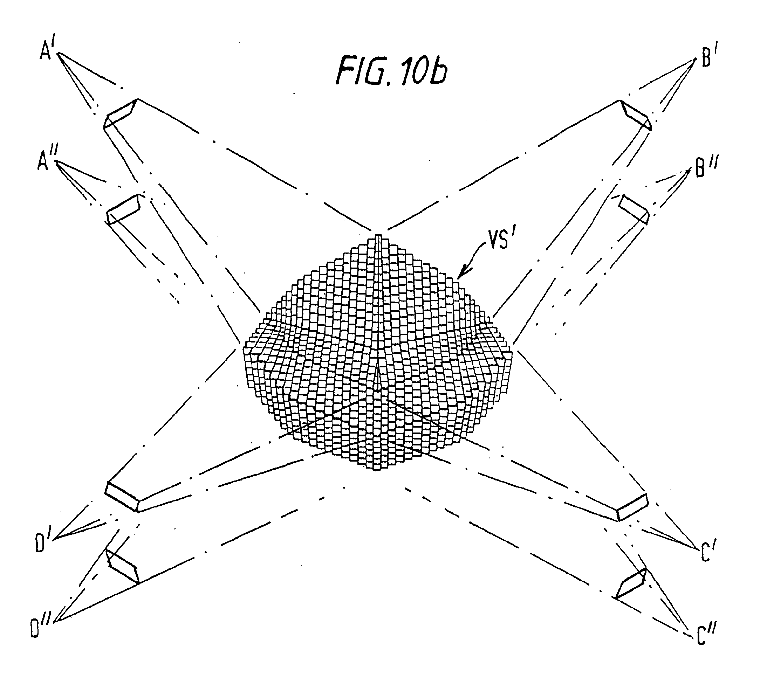

Each of the camera positions has a focal point $F_A$ to $F_D$ (in this example the focal lengths are all the same although this need not necessarily be the case) and an imaging area $I_A$ to $I_D$ (see Figure 10) defined by the camera aperture in the case of a camera using photographic film or by the CCD sensing area in the case of a CCD camera. Again, in this example, the imaging areas I of all four cameras are the same.

Figures 8 to 10 show by way of the dashed lines the viewing cones $VC_A$, $VC_B$, $VC_C$ and $VC_D$ of each of the camera positions A to D. Figures 8 and 9 also show the relative locations of the images $IM_A$, $IM_B$, $IM_C$ and $IM_D$ produced at the camera positions A to D.

The volume bounded by the intersection of the viewing cones of the camera positions A to D is identified by the reference sign VB in Figures 8 and 9.

As illustrated schematically in Figure 8, the voxel space VS defined by the CPU 22 in the manner described above with reference to Figures 3 to 7 lies wholly within the volume VB and consists of a close-packed cubic array of cubic (or right parallelopipedal) voxels V each of which lies wholly within the bounding volume VB.

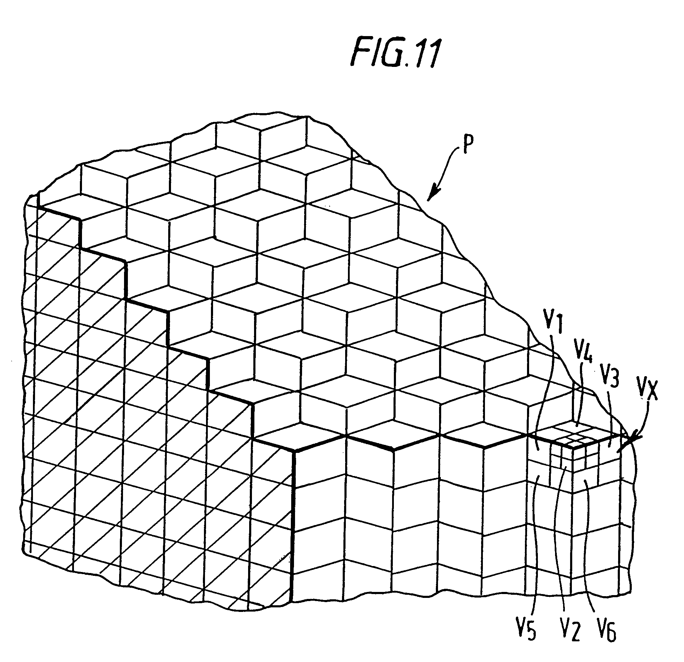

Figure 10a shows a perspective view for the camera arrangement shown in Figures 8 and 9 to illustrate the overall appearance of the voxel space VS in relation to the 3D surface 40 to be generated, in this case a bust of a man. It will, of course, be appreciated that Figure 10a necessarily shows the voxels V very schematically and, because of the very small size of the voxels V, is not accurate. Figure 11 shows a part-sectional perspective view of part P of the voxel space VS shown in Figure 10a to illustrate more clearly how the boundary of the voxel space VS is made up of a step-like arrangement of voxels V.

It will, of course, be appreciated that the shape of the bound volume VB defined by the intersection of the camera viewing cones will depend upon the relative orientations and numbers of the cameras and also upon the individual viewing cones which will in turn depend upon the focal points or positions of the cameras and the size and shapes of their imaging areas. To illustrate this, Figure lOb shows very schematically the initial voxel space VS' where the camera arrangement comprises four cameras A' to D' arranged above and looking down on the object and four cameras A" to D" arranged below and looking up at the object with, as in the example described above, the cameras being spaced at 90° intervals around the object. The periphery of the voxel space VS itself is, of course, determined by the boundary of the volume VB and the size of the voxels relative to the size of the bound volume VB. The size of the voxels, and thus the resolution to which the 3D object surface can be generated will depend upon the available computational capacity of the CPU 22 and the time available for the computation of the 3D object surface. Typically, the voxel space VS may consist of 100,000 voxels or up to several millions of voxels.

The method described above of defining the initial voxel volume by the intersection of the viewing cones of the camera positions avoids the disadvantages discussed above of defining the initial voxel volume using the silhouette or boundary of the object whose surface is to be generated and should also reduce the number of computations required to achieve the final 3D object surface in contrast to arrangements where the initial voxel space is defined arbitrarily so as to be sufficiently large to enclose the 3D object whose surface is to be generated.

A method of generating the 3D object surface starting from the initial voxel space VS will now be described with reference to Figures 10a, 12, 14a to d, 13 and 15.

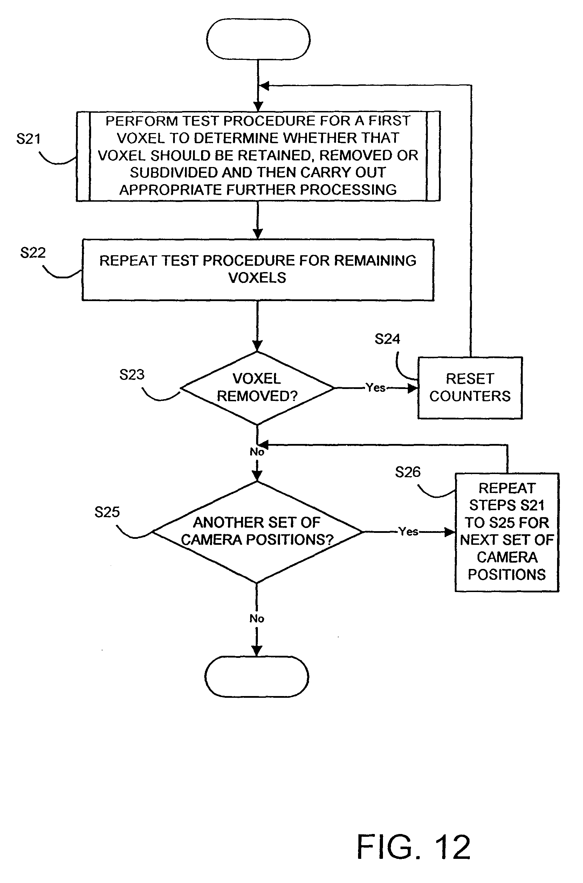

Figure 12 shows a top level flow chart for this method. At step S21, the CPU 22 performs a test procedure for a first one of the surface voxels n of the initial voxel space VS to determine whether it should be removed, retained or sub-divided and then performs further processing in accordance with that determination so that the voxel is removed, retained or sub-divided and the sub-voxels subjected to further processing as will be described below.

At step S22, the CPU 22 repeats the test procedure of step S21 for the remaining surface voxels until each of the surface voxels of the initial voxel space has been processed in accordance with step S21.

The CPU 22 then determines at step S23 whether any voxel or sub-voxel has been removed and, if the answer is yes, resets its counters at step S24 so as to enable steps S21 and S22 to be repeated for the remaining voxels. Steps S21 and S22 are repeated until the answer at step S23 is no. The reason for repeating the voxel sweep effected by steps S21 and S22 when voxels have been removed is that the removal of a voxel or sub-voxel may cause voxels that were previously completely occluded by other voxels or sub-voxels to become non-occluded or partially non-occluded at least for some images and may also cause voxels or sub-voxels that were previously hidden by other voxels or sub-voxels from certain of the images to be projectable into those images. Thus, the removal of a voxel or sub-voxel may effect the photoconsistency of the remaining voxels and sub-voxels.

This technique means that each surface voxel is checked against each image in each voxel sweep. The images in which a voxel is visible will, however, be at least partly determined by the geometric arrangement of the camera positions at which the images were recorded. It thus should be possible to determine from these camera positions that certain surface voxels will not be visible or will not be visible in sufficient images to enable their photoconsistency to be checked. Where this can be determined, then the voxel colouring process may be repeated for another set of camera positions, if available, to enable the photoconsistency of those surface voxels to be checked. Thus, at step S25, the CPU 22 will determine whether there is another set of camera positions that should be considered. When the answer at step S25 is yes, then the CPU 22 will repeat at step S26 steps S21 to 25 for the next set of camera positions until all sets of camera positions have been considered.

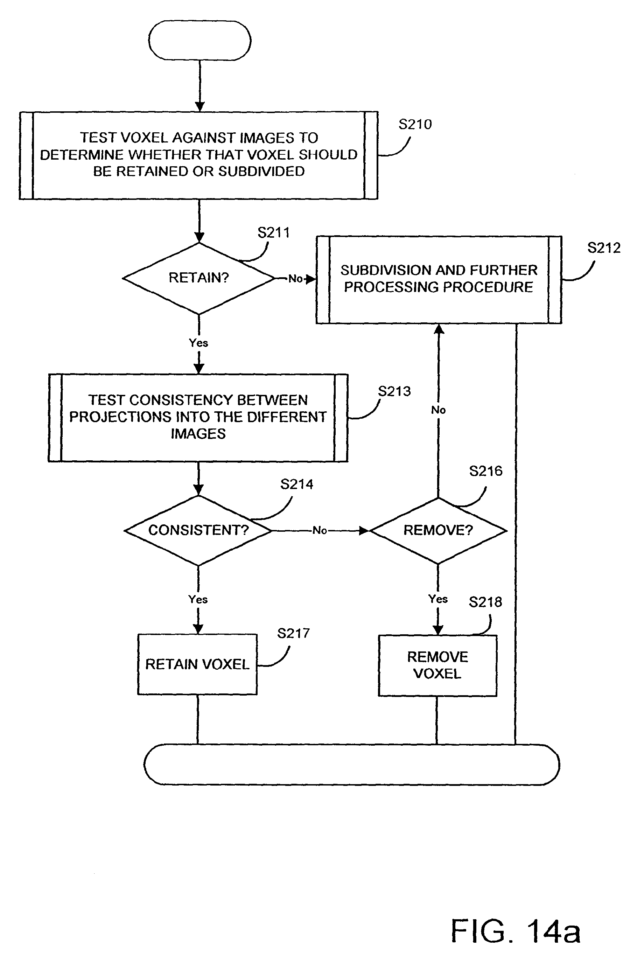

Figure 14a shows in greater detail the test procedure for a voxel carried out at step S21 in Figure 12.

At step S210 in Figure 14a, the CPU 22 tests the voxel against each of the images in turn to determine whether the voxel should be retained or sub-divided. The CPU 22 then checks at step S211 whether the result of the test at step S210 was that the voxel should be retained. If the answer is no, then at step S212 the CPU subjects the voxel to sub-division and further processing as will be described in detail below.

If the answer at step S211 is yes, then the CPU 22 tests, at step S213, the consistency between projections of the same voxel into the different images and then checks at step S214 whether the result of the tests was that the images were consistent. When the answer at step S214 is yes, then the CPU 22 retains the voxel at step S217.

If the answer at step S214 is no, then the CPU 22 checks at step S216 whether the result of the test at step S213 was that the voxel should be removed and if so removes the voxel at step S217. If the answer at step S216 is no then the CPU 22 carries out step S212 as described above so that the voxel is subjected to sub-division on further processing.

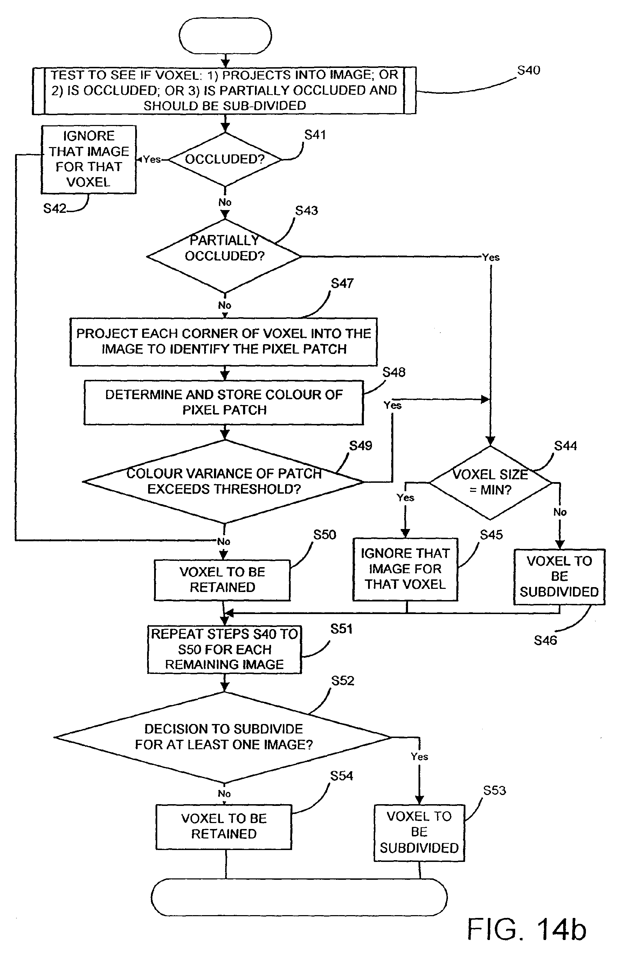

Figure 14b shows step S210 in greater detail. At step S40, the CPU 22 tests to see whether a surface voxel (1) projects into an image; (2) is occluded in respect of that image; or (3) is partially occluded with respect to that image and should be sub-divided.

The CPU 22 then checks at step S41 whether the answer at step S40 was that the voxel was occluded with respect to that image and. If so, the CPU 22 ignores that image for that voxel at step S42 and determines that, on the basis of that image, the voxel should be retained at S50. If, however, the answer at step S41 is no, then the CPU 22 checks to see whether the answer at step S40 was that the voxel was partially occluded with respect to that image (step S43). If the answer at step S43 is yes, then the CPU 22 checks at step S44 whether the current voxel size is the minimum allowable and if the answer is yes decides at step S45 that that image should be ignored for that voxel and that, on the basis of the image, the voxel should be retained. If the answer at step S44 is no, then the CPU 22 determines at step S46 that the voxel should be sub-divided.

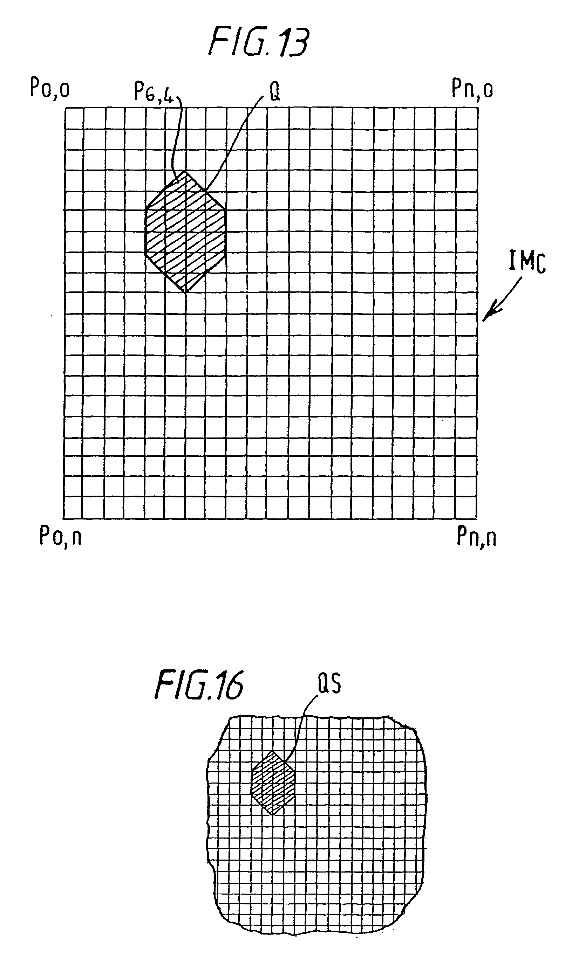

If the answer at step S43 is no, then in step S47 the CPU projects each of the eight corners of the voxel under test into the image to identify the pixel patch corresponding to that voxel. Figure 13 shows schematically an array of pixels $P_{o,o}$ to $P_{n,n}$ of part of an image $IM_c$ to illustrate the projection of a voxel to a pixel patch Q (shown as a hatched area). The CPU 22 then determines at step S48 the colour of that pixel patch (for example Q in Figure 13). Where, as shown in Figure 13, the boundary of the pixel patch cuts through pixels (such as pixel $P_{6,4}$ in Figure 13) the entirety of these pixels is considered to fall within the pixel patch. The CPU 22 determines the colour of the pixel patch by summing the respective numbers (each between zero and 255 for each colour in this example) associated in its memory with the different pixels forming the patch and dividing that sum by the number of pixels in the pixel patch to determine the colour (where all the pixels are the same colour) or the average colour of the pixel patch. This colour is then stored in the memory 22a by the CPU 22 for that voxel and that image m.

The CPU 22 then checks at step S49 whether the variance of the colours of the pixels in the patch exceeds a predetermined threshold, for example whether the standard deviation in colour is greater than 10. If the answer is yes, then the CPU 22 determines that that image contains too much colour variation and that that image cannot be used for checking the photoconsistency of that voxel without sub-division of the voxel. The CPU 22 then determines at step S44 whether the voxel size is already at a minimum. If the answer is yes, the CPU 22 determines at step S45 that that image should be ignored for the voxel and that the voxel should, as far as that image is concerned, be retained at step S50. If the answer is no, then the CPU determines at step S46 that the voxel should be sub-divided.

At step S51 in Figure 14b the CPU 22 repeats steps S40 to S50 for each of the available images and, at step S52 checks to see whether a decision was taken at step S46 to sub-divide the voxel with respect to any one or more of the images. If the answer at step S52 is yes, then the CPU 22 confirms at step S53 that the voxel is to be sub-divided. If, however, the answer at step S52 is no, then the CPU 22 determines at step S54 that the voxel should be retained.

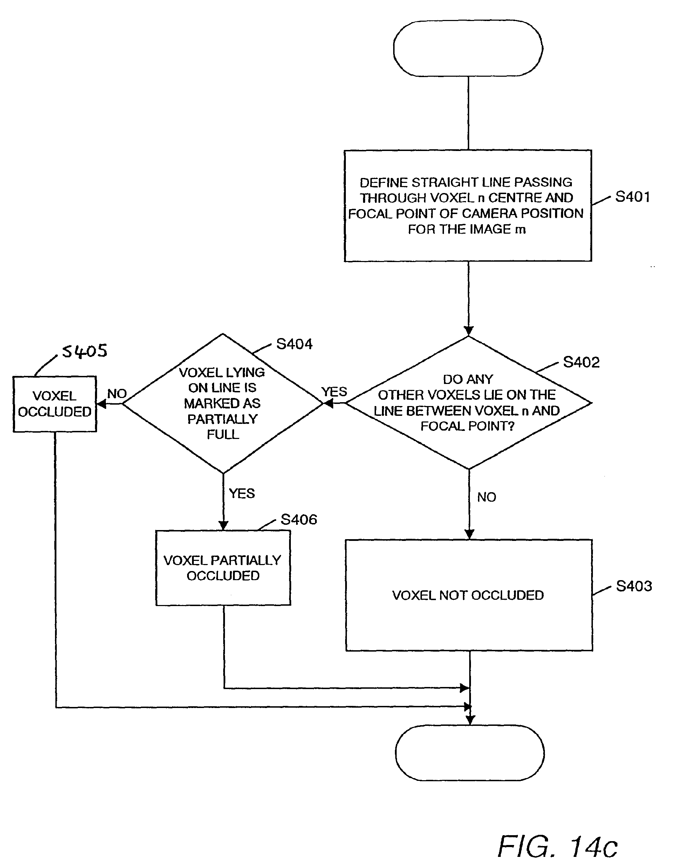

Figure 14c shows in greater detail the steps carried out at step S40 in Figure 14b. Thus, at step S401, the CPU 22 defines a straight line passing through the centre of the voxel and the focal point F of the camera position which produced the image for which the voxel is being tested. Figure 10a shows a voxel $V_x$ being projected into the image $IM_c$ along the line xx.

The CPU 22 then checks at step S402 whether any other voxels lie on the line between the voxel under test and the focal point F. If the answer is no, then the CPU 22 determines that the voxel is not occluded for that image at step S403. If, however, the answer at step S402 if yes, then the CPU 22 checks the information in its memory 22a to determine, at step S404, whether the voxel lying on the line between the voxel being tested and the focal point F is a voxel that has been sub-divided, that is, as will be described below whether the information in the CPU's memory 22a includes information marking the voxel on the line as being partially full. If the answer at step S404 is yes, then the CPU 22 determines at step S406 that the voxel under test is partially occluded for that image. If the answer at step S404 is no, then the CPU 22 determines that the voxel under test is completely occluded for that image at step S405. The information as to whether the voxel under test is occluded, partially occluded or not occluded in that image is stored in the memory 22a.

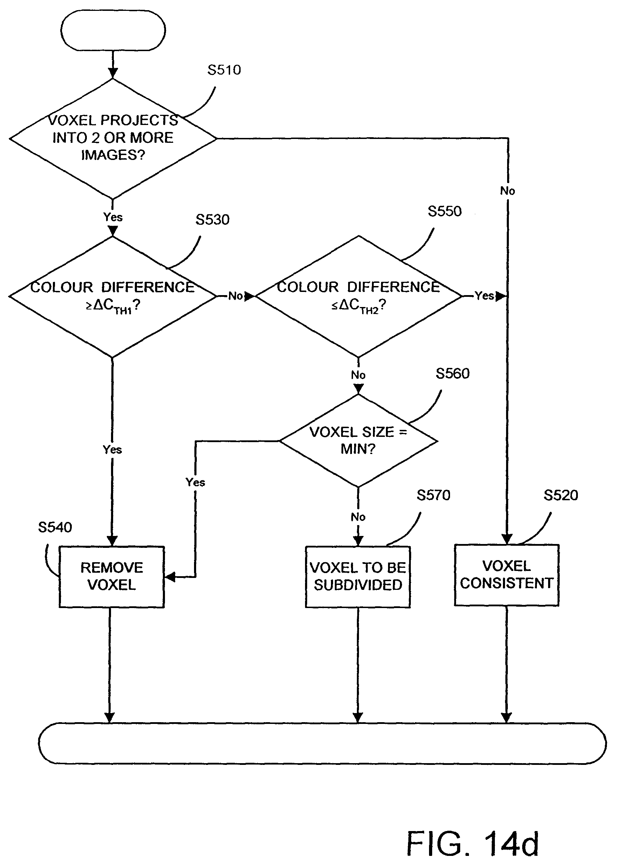

Figure 14d shows in greater detail step S213 of Figure 14A. Thus, at step S510, the CPU 22 checks to see whether the voxel under test projects into two or more images. If the answer is no, the CPU 22 determines that the consistency of the voxel cannot be checked and assumes that the voxel is consistent at step S520. If, however, the answer is yes, then at step S530 the CPU 22 compares the colour values of the pixel patches Q for each of the images in which the voxel was visible and determines whether the colour difference between the patches is greater than or equal to a first predetermined threshold $\Delta C_{TH1}$ by determining whether the standard deviation of the colour values exceeds a first predetermined value. Typically, the predetermined value for the standard deviation may be 20. Any technique may be used to determine the standard deviation. If the colour difference between the patches exceeds $\Delta C_{TH1}$, then the CPU 22 determines at step S540 that the voxel is inconsistent and removes it at step S540. If, however, the answer at step S530 is no, then the CPU 22 checks at step S540 whether the colour difference is less than or equal to a second predetermined threshold $\Delta C_{TH2}$ smaller than the first predetermined threshold. In this example the second predetermined threshold is a standard deviation of 10. If the answer at step S550 is yes the standard deviation is equal to or smaller than the second predetermined threshold then the CPU 22 determines at step S520 that the voxel is consistent and should be retained. If the answer at step S550 is no, then the CPU 22 checks at step S560 whether the voxel size is already at a minimum and, if so, decides that the voxel should be removed at step S540. Otherwise the CPU 22 determines that the voxel should be sub-divided (step S570). Thus, if the pixel patches into which the voxel projects have a colour variation greater than or equal to the first threshold the CPU 22 determines that that voxel cannot possibly form part of the 3D object surface because its colour is too inconsistent between images. If however the colour variation between the pixel patches is less than the first predetermined threshold but greater than the second predetermined threshold $\Delta C_{TH2}$ then the CPU 22 determines that the photoconsistency check is not conclusive and that the voxel should be sub-divided as part of the voxel may form part of the surface.

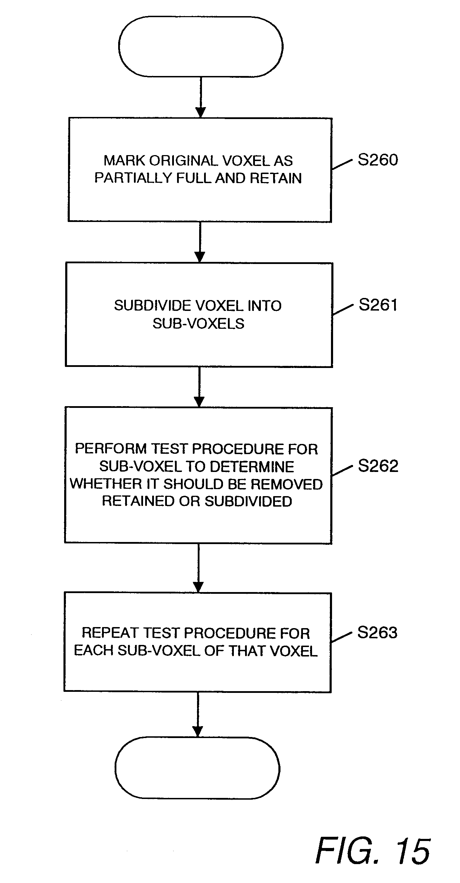

Figure 15 shows a flow chart illustrating in greater detail the processing carried out step S212 in Figure 14A. Thus, at step S260 in Figure 15 the CPU 22 adds to its memory 22a information marking the original voxel as partially full and retains that voxel to enable the testing described above with reference to Figure 12 to be carried out for subsequent voxels. At step S261, the CPU 22 sub-divides the voxel into a set of subsidiary voxels, sub-voxels. Figure 11 shows a voxel $V_x$ that has been divided into eight subsidiary voxels of which sub-voxels V1 to V6 are visible in Figure 11. It will, however, be appreciated that the CPU 22 may, for example, divide the voxel into 16 or more sub-voxels.

Once the CPU 22 has stored the sub-voxels and their location in its memory 22a the CPU performs the test procedure described above with reference to step S21 in Figure 12 for a first one of the sub-voxels to determine whether it should be removed, retained or sub-divided at step S262 and then, at step S263, repeats that test procedure for each of the other sub-voxels of that voxel. It will, of course, be appreciated that the test procedure at step S262 is carried out in the manner described above with reference to Figures 12 to 14d with the exception that, of course, it is a sub-voxel rather than a voxel that is being tested.

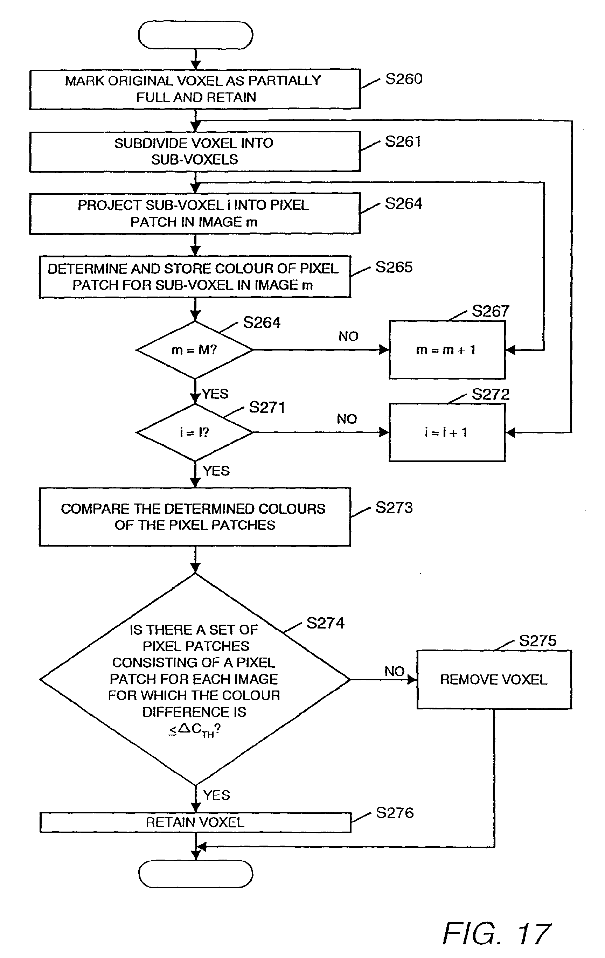

Figure 16 shows diagrammatically a portion of the part of the part of the image shown in Figure 13 to illustrate the projection of a sub-voxel into a pixel patch QS in an image.

As will be appreciated from Figures 12 to 14d if a sub-voxel is found to be partially occluded (that is a correspondingly sized sub-voxel which has already been divided into further subsidiary voxels is on the line between that sub-voxel and the focal point for the image concerned,) or the colour variance of the patch into which the sub-voxel projects in an image exceeds the predetermined threshold or the colours of the patches into which the sub-voxel projects are inconsistent, then that sub-voxel may itself be sub-divided. However, before a sub-division is carried out, the CPU 22 checks at step S44 in Figure 14b or step S56 in Figure 14d whether the minimum voxel size has been reached and if so determines that the minimum size sub-voxel should be removed rather than sub-divided. The minimum size may be determined in dependence on the resolution of the images being considered and may, for example, be the size of a sub-voxel that projects to a single pixel in an image.

Thus, in this method, when the CPU 22 determines that a voxel (for example voxel $V_X$ in Figure 11) is partially occluded, projects to a pixel patch having too large a colour variance or the colour difference between the pixel patches is too great, the CPU 22 does not immediately remove that voxel but rather sub-divides that voxel into subsidiary voxels (eight in the example given above) and then tests each of those sub-voxels in turn in the same way as the voxels were tested. Any consistent sub-voxels are retained whereas, if a sub-voxel is determined to be photo-inconsistent, the CPU 22 checks whether the minimum sub-voxel size has been reached and, if so, removes the sub-voxel. If not, the CPU 22 further sub-divides the sub-voxel and repeats the photoconsistency check for each further sub-divided voxel.

In the example described above with reference to Figures 12 to 15, the CPU 22 performs step S21 in Figure 12 by first checking whether a voxel is occluded, partially occluded or unoccluded (step S14 in Figure 14b) and, if the voxel is unoccluded, goes on to check the colour variance (step S49 in Figure 14b). These two tests could, however, be combined so that, for example, the CPU 22 checks to see if the voxel is fully occluded and, if not, then checks the colour variance (step S49 in Figure 14b) and, if the colour variance does not exceed the predetermined threshold, only then checks to see if the voxel is partially occluded.

Also, the photoconsistency check described with reference to Figure 14d may be combined with these other checks so that, for example, the CPU 22 checks first to see if the voxel is visible in at least two of the images then carries out the photoconsistency check and then carries out the colour variance test (step S49 in Figure 14b) and the partial-occlusion test only if the photoconsistency test is satisfactory. As another possibility, the partial-occlusion test may be carried out before the photoconsistency test. Also, step S53 of Figure 14d could be omitted so that the CPU 22 only tests to see if the colour difference is less than or equal to the second predetermined threshold and, if the answer is no, sub-divides the voxel if it has not already reached the minimum size. This would mean that there was no upper threshold beyond which the voxel was considered definitely to be inconsistent with the 3D object surface. Although this may further reduce the possibility of a voxel being erroneously removed it would, as will be appreciated, increase the number of voxels that have to be sub-divided and therefore the overall processing time required.

It will, of course, be appreciated that the first and second predetermined thresholds may be user adjustable so as to enable a user to adjust these thresholds in accordance with the 3D object whose surface is being generated. The colour variance threshold may similarly be adjusted.

The method described with reference to Figures 12 to 15 thus enables the process of determining the photoconsistency of a voxel to be further refined by, when it is not clear whether a voxel forms part of the 3D object surface, sub-dividing that voxel into subsidiary voxels (sub-voxels) and then testing the sub-voxels for consistency with the 3D object surface. This should avoid or at least reduce the possibility of erroneous removal of a voxel when, for example, the colour patch into which that voxel projects in an image contains significantly different colours or a voxel is partially occluded from an image. The fact that a voxel can be sub-divided and the sub-voxels tested before making any decision to remove that voxel means that it is not necessary for the initial size of the voxels to be determined by the smallest colour area in the 3D object surface to be generated. Rather, the initial voxel size can be, for example, determined by the overall colouring of the images being used and need only be made smaller (sub-divided) where required, that is where the images have rapidly changing areas of colour such as may, for example occur at edges or highly patterned areas of the surface. This means that the voxel colouring process avoids or reduces the possibility of erroneous removal of a voxel due to significant colour changes within the colour patches into which that voxel projects without having to define the initial size of the voxels as being equivalent to the minimum single colour area in the images. This therefore should reduce the computational power and time required to generate the 3D object surface.

In the above described embodiment a sub-voxel has the same shape as the voxels and the photo inconsistency threshold is the same for the voxels as it is for sub-voxels. This need not, however, necessarily be the case and there may be advantages to having sub-voxels of different shape from the voxels and to using different photo inconsistency thresholds for voxels and sub-voxels.

Figure 17 shows a flowchart illustrating another example of a subdivision and further processing procedure that may be carried out at step S212 in Figure 14a.

When the additional processing shown in Figure 17 is carried out, steps S260 and S261 are carried out as for the additional processing shown in Figure 15.

When the voxel has been divided into sub-voxels at step S261, a first sub-voxel i is projected into a pixel patch in a first image m (for example the pixel patch QS in Figure 16) at step S264 in Figure 17 by projecting each corner of the sub-voxel into the image along the line passing through that corner and the focal point of the image. At step S265, the CPU 22 determines and stores the colour of the pixel patch for that sub-voxel and that image and then, at step S266, checks whether m = M (that is whether that sub-voxel has been projected into each of the available images. If the answer is no, then the CPU 22 increments M by 1 at step S267 and repeats steps S264 to S266 until the answer at step S266 is yes). When the answer at step S266 is yes, that is a sub-voxel has been projected into all of the images, the CPU 22 determines at step S271 whether each of the sub-voxels into which the voxel has been divided has been projected into the images (that is whether i = I?). If the answer at step S271 is no, then the CPU 22 increments i by 1 at step S272 and then repeats steps S261 to S267, S271 and S272 until the answer at step S271 is yes. When the answer at step S271 is yes, the CPU 22 will have determined and stored for each sub-voxel the colour of the pixel patches associated with that sub-voxel. It will, of course, be appreciated that the order in which steps S261 to S267, S271 and S272 are carried out may be altered so that each sub-voxel is projected into an image and then the step of projecting the sub-voxels is repeated image by image.

When the answer at step S271 is yes, the CPU 22 compares at step S273 the determined colours of the pixel patches for the voxel being considered. Then, at step S274, the CPU 22 determines whether there is, for that voxel, a set of pixel patches consisting of a pixel patch for each image for which the colour difference is $\leq \Delta C_{TH}$. Thus, the CPU 22 does not check whether there is photoconsistency between corresponding sub-voxels but rather whether there is photoconsistency between pixel patches from the different images regardless of which sub-voxel projects into that pixel patch. If the answer at step S274 is no there is no such set of pixel patches, then the CPU 22 removes the entire voxel at step S275. If, however, the answer at step S274 is yes, then the entire voxel is retained at step S276.

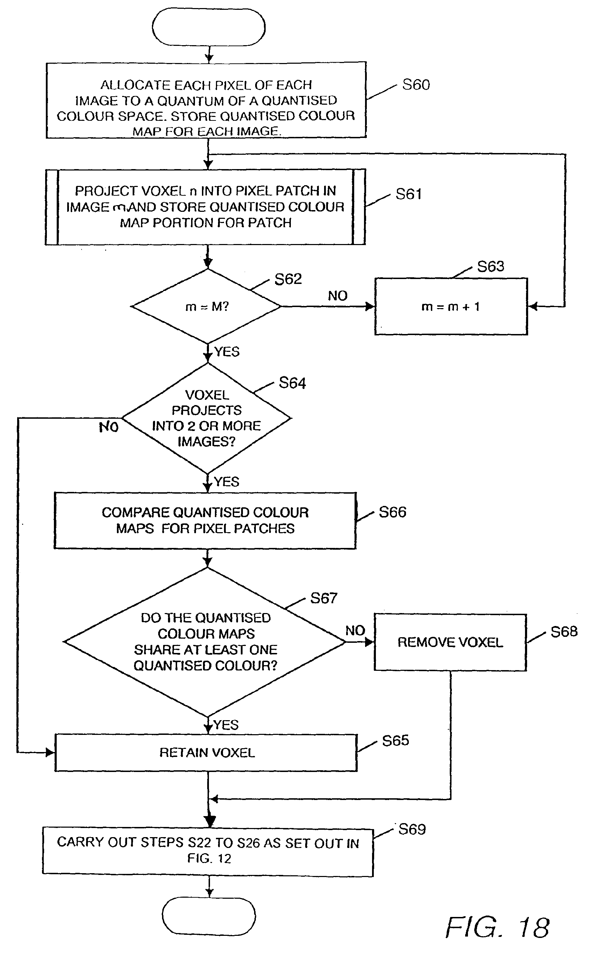

Figure 18 illustrates another way of carrying out the voxel colouring process that replaces step S21 described above with reference to Figures 12 to 15.

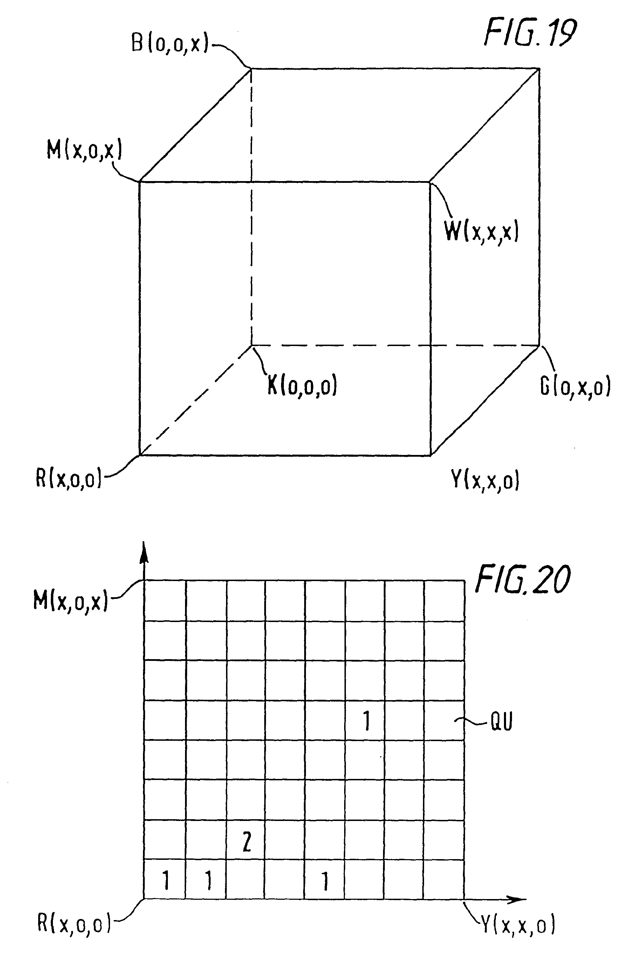

At step S60 in Figure 18, the CPU 22 allocates each pixel of each image to be used for the voxel colouring process to a quantum of a quantized colour space and stores a quantized colour map for each image. Any appropriate conventional colour space may be used. In this example, as shown schematically in Figure 19, the colour space is a cubic RGB colour space in which the origin (0,0,0) represents black (K) while the corners of the cube along the x, y and z axes represent red (R), green (G) and blue (B), respectively. In this example, the colour space shown in Figure 19 is quantized by dividing the colour cube into a set of smaller cubes. Figure 20 shows one plane of the colour cube to illustrate this division. As shown in Figure 20, each side of the colour cube is divided by eight so that the colour space is divided into 512 quanta. Figure 20 shows the quanta QU as abutting one another and not overlapping. The quantized colour map is stored for each image so that, instead of being represented by the original RGB value, each pixel is represented by a number identifying the corresponding quantum.

At step S61, the CPU projects voxel n into a pixel patch in image m and stores a quantized colour map for the patch. This is carried out in the manner shown in Figure 14c except that the CPU 22 tests only to see whether the voxel is fully occluded or unoccluded, that is steps S404 and S406 of Figure 14c are omitted. This quantized colour map will indicate the frequency of occurrence of each colour quantum in that pixel patch. Of course, the quantized colour map may be compressed for a particular pixel patch so that only the portion of the colour space containing quanta present in that pixel patch is stored. Thus, for example, where the colours of the pixel patch all fall within the plane shown in Figure 20, then only that portion of the colour space will be stored as the quantized colour map. The quantized colour map may be stored in tabular form as shown in Figure 20 with each quantum indicating whether, and if so how many times, a colour quantum appears in a pixel patch. For example, Figure 20 shows some of the colour quanta associated with numbers indicating the frequency of occurrence of those quanta in a pixel patch. As another possibility, the quantized colour map may be stored as a histogram.

It will be appreciated that the assigning of the pixels to respective colour quanta could be carried out after a voxel has been projected into an image so only pixels to which a voxel projects are assigned to colour quanta.

The CPU 22 then checks if all of the images have been checked (m = M) at step S62 and, if not, increments M by one at step S63 and repeats steps S61 to S63 until the answer at step S62 is yes. The CPU 22 then determines if the voxel projects into two or more images (step S64). If the answer is no, the CPU determines that the photoconsistency cannot be checked and retains the voxel at step S65. When the answer at step S64 is yes, the CPU 22 compares, at step S66, the quantized colour maps for the pixel patches for the images into which the voxel projects. The CPU 22 then determines at step S67 whether the quantized colour maps share at least one quantized colour. If the answer is no, then the CPU determines that the voxel is photo-inconsistent and removes it at step S68. If, however, the answer is yes, then the CPU retains that voxel at step S65. Steps S22 to S26 are then carried out as described above with reference to Figure 12 at step S69.

The methods described above with reference to Figures 15, 17 and 18 enable the voxel colouring process to take account of voxels that project to occluding boundaries or to areas of high spatial frequency so that the voxel does not project to an area of constant colour. The method described with reference to Figure 15 enables such voxels to be sub-divided and the individual sub-voxels to be checked while the methods described above with reference to Figures 17 and 18 err on the side of caution so that if there is at least some correspondence in colour between parts of the different pixel patches associated with a voxel, that voxel is retained. This should avoid or at least reduce the possibility of catastrophic failure of the voxel colouring process resulting from erroneous removal of a voxel that actually forms part of the 3D object surface but projects to an occluding boundary or area of high spatial frequency.

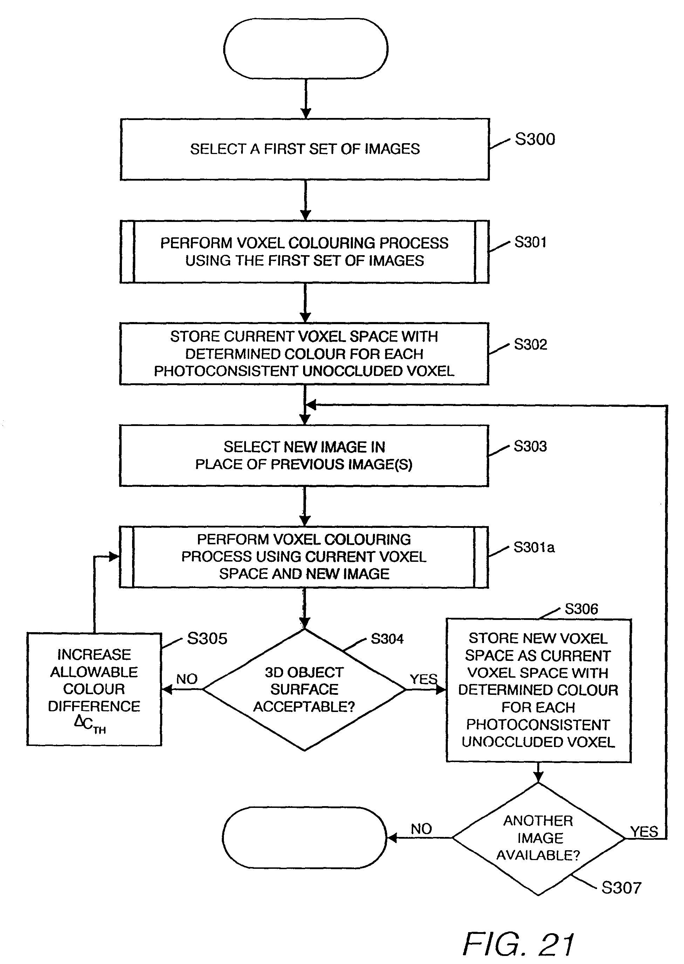

Another method for defining the 3D object surface once the initial voxel space has been defined will now be described with reference to Figures 21 to 22b.

At step S300 in Figure 21, the CPU 22 selects a first set of images for use in the voxel colouring process. This first set of images will consist of a sub-set of the images used to determine the initial voxel space.

Typically, the first set of images will consist of up to 20 to 30 images taken at different positions and orientations around the object.

At step S301, the CPU 22 performs a voxel colouring process using the first set of images as described above with reference to Figures 12a and 12b or Figures 12a and 12b as modified by Figure 15 or 17, or Figure 18.

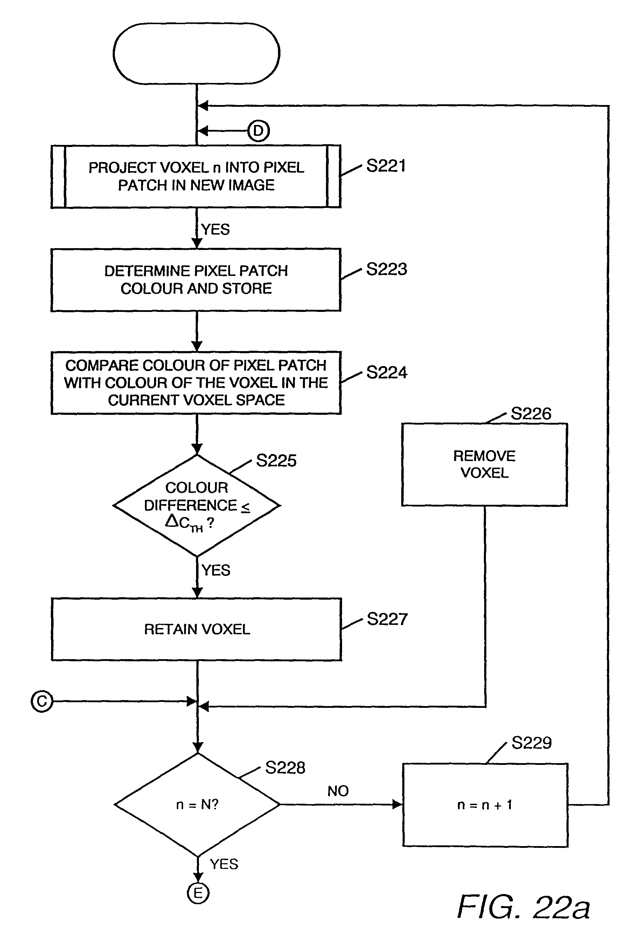

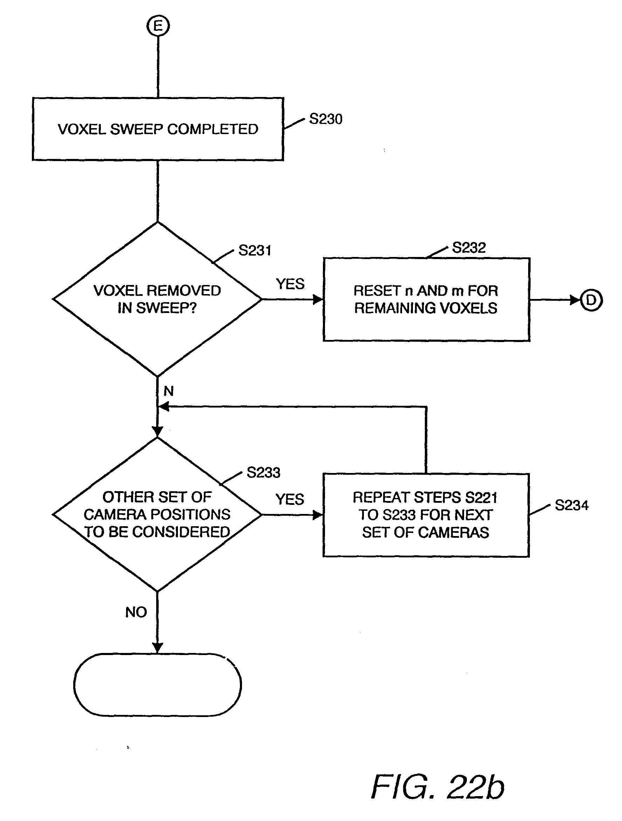

At the end of this voxel colouring process, the CPU 22 stores at step S302 the current voxel space together with the determined colour for each photoconsistent non-occluded voxel of the current colour space. At step S303 the CPU 22 selects another image from the stored images, that is an image not in the first set of images, and at step S301a the CPU 22 performs the voxel colouring process using the current voxel space and the new image as will be described in greater detail below with reference to Figures 22a and 22b. At step S304, the CPU determines whether the voxel colouring process converged to a reasonable 3D object surface. This determination may be effected by the CPU 22 causing the 3D object surface to be displayed to the user on the display 24 together with a message saying "Please confirm acceptance of the 3D object surface" so that the user can determine whether the voxel colouring process has proceeded satisfactorily or whether erroneous removal of voxels has resulted in an erroneous 3D object surface. Alternatively, the CPU 22 itself may determine roughly whether the 3D object surface is acceptable by using the data regarding the volume of the object that may previously have been input by the user. In this case, the CPU 22 would determine that the 3D object surface is not acceptable if the volume bounded by that 3D object surface is less than the expected volume of the object.

When the answer at step S304 is no, then at step S305 the CPU 22 increases the allowable colour difference used in the voxel colouring process and repeats steps S301a, S304 and S305 until the CPU determines at step S304 that the 3D object surface is acceptable. This repetition of the voxel colouring process is possible because the voxel space that resulted from the previous voxel colouring process is stored at step S302 and the image data for the'new image added for the current voxel colouring process is stored at step S303 and is not discarded until the answer at step S304 is yes. This method thus enables a user to return to the previously determined voxel space if the voxel colouring process carried out at step S301a results in erroneous removal of one or more voxels or even catastrophic failure of the voxel colouring process.

When the answer at step S304 is yes, then the CPU 22 stores the newly derived voxel space as the current voxel space together with the determined colour for each photoconsistent non-occluded voxel and discards the previously stored image at step S306 and then checks at step S307 whether there is another image available.

Step S307 may be carried out automatically by the CPU 22 where a large number of images have been pre-stored. The images may be selected by the CPU in any predetermined order. For example, the images may be successive images along a predetermined path around the object. As another possibility, the first set of images may consist of images taken at predetermined intervals or angles relative to one another around the object and the next images may be intermediate those images and so on.

As another possibility at step S307, the CPU 22 may allow the user a choice in the next image selected. For example, the CPU 29 may display a message to the user requesting the user to select one of a number of additional pre-stored images and may also give the user the opportunity to input data for further images (for example via a removable disc 27, as a signal over the interface I or using a digital camera). In this way, the user can view the results of the previous voxel colouring process and determine whether it would improve the 3D object surface if data from one or more additional images was also used in the voxel colouring process.

Steps S303 to S307 are repeated until the answer at step S307 is no, that is no more images are available.

Figures 22a and 22b illustrate in greater detail the step S301a of Figure 21 of performing a voxel colouring process using the current voxel space and a new image.

At step S221, the voxel n is projected into a pixel patch in the new image in the manner described above with reference to Figure 14. If the voxel n does not project into the new image then as described with reference to Figure 14, the CPU 22 proceeds to point C which is step S228 in Figure 22a and if all the non occluded voxels of the current voxel volume have not yet been projected into the new image, increments n by 1 at step S229 and then repeats step S221. When the voxel does project into the new image, the CPU 22 determines at step S223 the colour of the pixel patch and stores this colour in association with the voxel n for the new image in its memory 22a. The step S223 of determining the pixel patch colour is carried out in the same manner as described above with reference to Figure 12a.

At step S224, the CPU 22 compares the colour of the pixel patch for the new image with the stored colour associated with that voxel in the current voxel space. The CPU then checks at step S225 whether the colour difference is less than or equal to the predetermined threshold $\Delta C_{TH}$. If the answer is no, the voxel is removed at step S226 while if the answer is yes the voxel is retained at step S227. The CPU then determines at step S228 whether all the non-occluded voxels of the current voxel space have been visited and if the answer is no increments n by 1 at step S229 and then repeats steps S221 to S229 until the answer at step S228 is yes.

When the answer at step S228 is yes, the CPU 22 determines at step S230 that the voxel sweep has been completed (that is all non-occluded voxels have been visited). The CPU then checks at step S231 whether any voxels have been removed in the sweep and if the answer is yes resets n and m for the remaining voxels at step S232 and, for the reasons given above, repeats steps S221a to S232 until the answer at step S231 is no. When the answer at step S231 is no, the CPU 22 determines whether there are any other sets of camera positions to be considered at step S223 and if the answer is yes repeats at step S234 steps S221a to S234 until all of the sets of cameras have been considered.

As will be appreciated from the above, the steps set out in Figures 22a and 22b are carried out each time a new image is added and the photoconsistency of that new image is compared with the stored results of the previous voxel colouring process. This means that it is only necessary to store in the CPU's working memory 22a the current voxel space, the colour associated with each non-occluded voxel of that space and the current image. This also means that the 3D object surface resulting from the voxel colouring process can be refined as required by the user simply by requesting the CPU 22 to check the photoconsistency of the existing voxel volume against another image at step S307 in Figure 21.

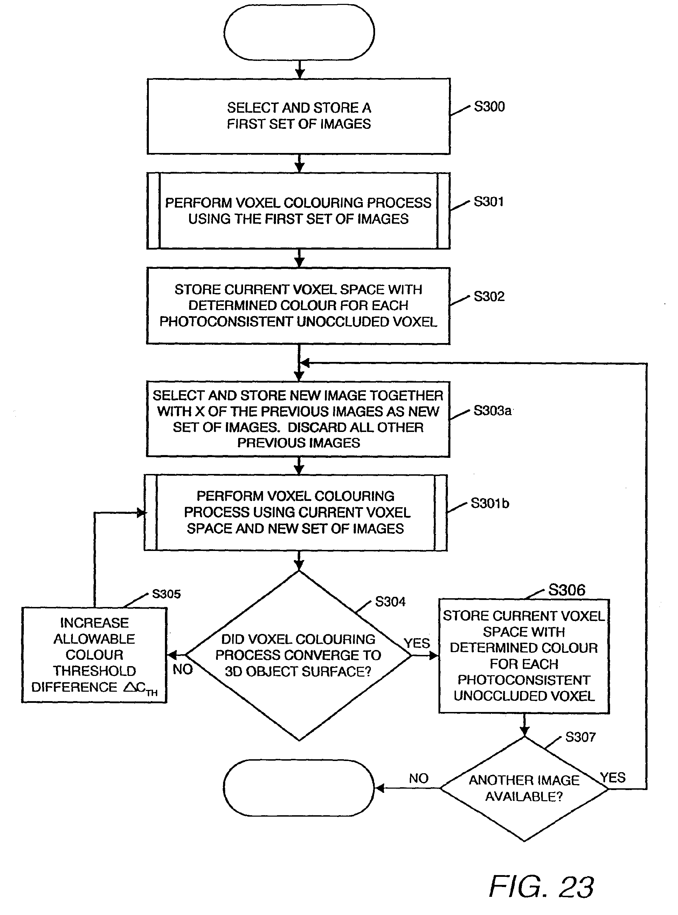

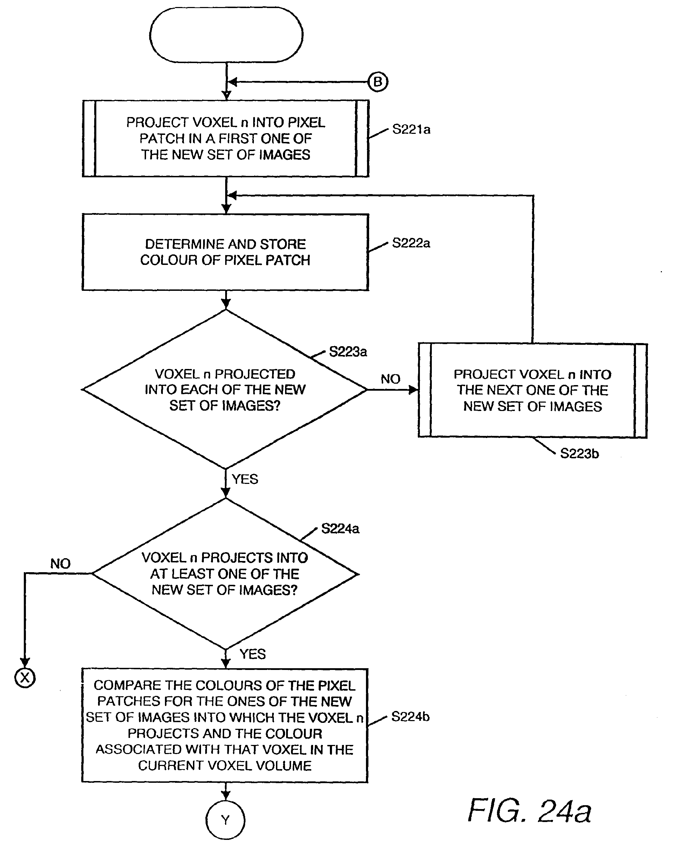

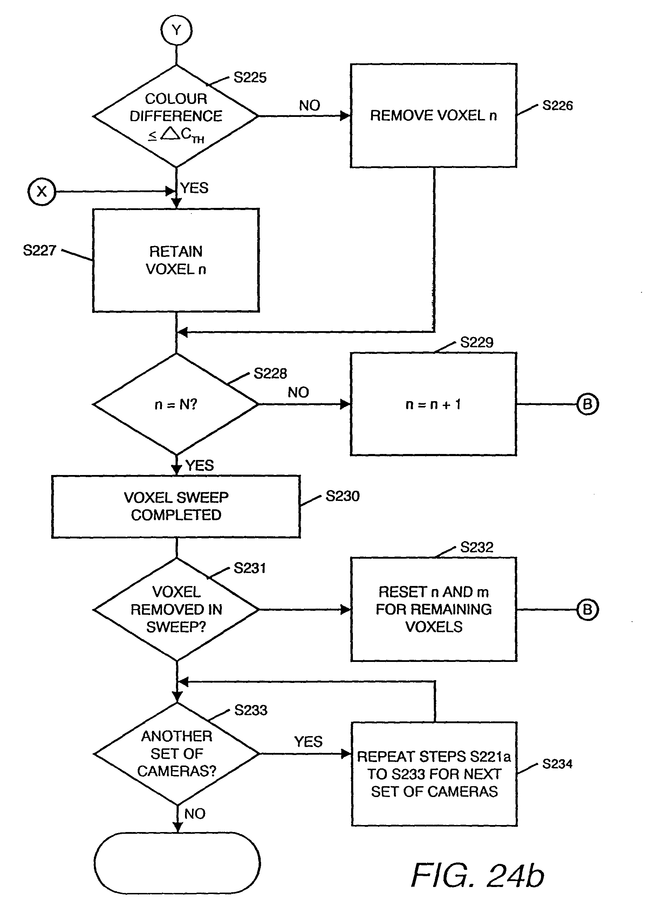

Figures 23, 24a and 24b illustrate another method for defining the 3D object surface once the initial voxel space has been defined. Figure 23 corresponds to Figure 21 while Figures 24a and 24b correspond to Figures 22a and 22b.

The method shown in Figures 23, 24a and 24b differs from that described above with reference to Figures 21 to 22 in that, in this case, a number of previous images are retained in addition to the new image and the voxel colouring process is repeated using the current voxel space, the stored previous images and the new images. The number of previous images used will be considerably less than that used as the first set of images and may be, for example, 10. The number of previously stored images is kept constant so that, each time a new image is added, the oldest of the previously stored images is discarded. Where images of the first set still remain, then the image to be discarded (that is the "oldest" image) will be selected at random from that first set. Once all of the first set of images have been discarded, then the oldest image can be determined by looking at the time at which that image was added.

As can be seen from Figure 23, in this method steps S300 to S302 are carried out in the same manner as described above with reference to Figure 21. However, at step S303a, instead of just storing the new image in place of the previous images, the CPU 22 stores the new image together with x (in this example 10) of the previously used images and discards all other images.

The voxel colouring process is then carried out at step S301b using the current voxel space and the new set of images (that is the new image and the previous 10 images). Steps S304 to S307 are then carried out as described above with reference to Figure 21.

In the method shown in Figure 23, the voxel colouring process carried out at step S301 is the same as that described above with reference to Figures 12 and 14 or Figures 12a and 12b when modified by Figure 17 or 18 or Figure 18.

The voxel colouring process carried out at step S301b differs somewhat from that described above with reference to Figures 22a and 22b as can be seen from Figures 24a and 24b. Thus, at step S221a in Figure 24a, the CPU 22 projects voxel n into a pixel patch in a first one of the new set of images in the manner described above with reference to Figure 14.

The CPU 22 then determines and stores the colour of the pixel patch at step S222a in the manner described above and at step S223a the CPU 22 determines whether the voxel n has been projected into each of the new set of images. If the answer at step S223a is no, then the CPU 22 projects voxel n into the next one of the new set of images at step S223b in the manner described above with reference to Figure 14. When the answer at step S223a is yes, the CPU 22 determines at step S224a whether the voxel n projects into at least one of the new set of images. If the answer is no, then the CPU 22 determines that it is not possible to check the photoconsistency of that voxel in this particular voxel colouring process and so retains that voxel at step S227 (Figure 24b). If the answer at step S224a is yes, then the CPU 22 compares, at step S224a, the colours of the pixel patches for the ones of the new set of images into which the voxel n projects and the colour associated with that voxel in the current voxel volume. The CPU 22 then determines at step S225 whether the difference in colour between the pixel patches and the colour associated with that voxel in the current voxel volume is less than or equal to $\Delta C_{TH}$. If the answer at step S225 is no, then the voxel is removed at step S226 while if the answer is yes the voxel is retained at step S227. Steps S228 to S234 are then carried out as described above with reference to Figures 22a and 22b.

The method described above with reference to Figures 23 to 24b requires a larger amount of data to be stored than the method described with reference to Figures 21 to 22b. However, the storage of the additional ones of the previous images means that less image information is lost and allows the photoconsistency of the surface voxels of the current voxel volume to be checked again with each of these images in combination with the new image. In contrast, the method described with reference to Figures 21 to 22 requires less storage of data but only enables the new image to be checked against the currently decided voxel space.

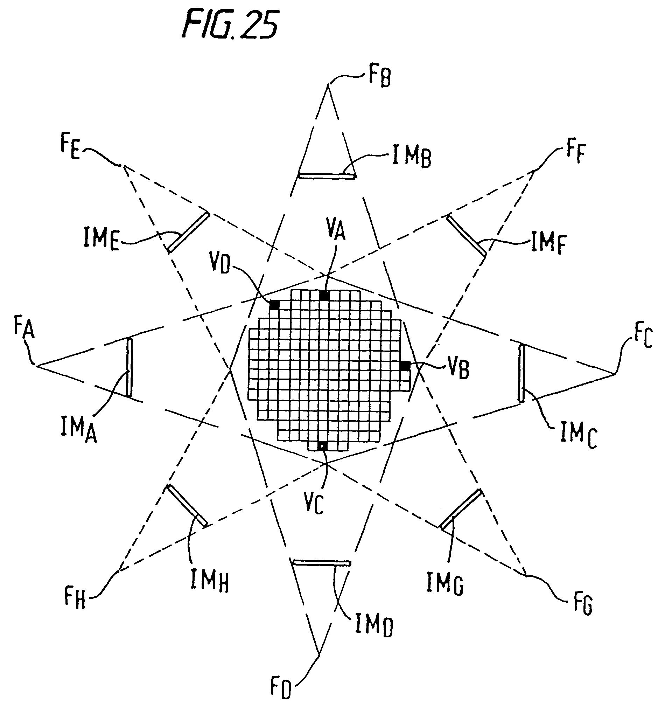

Figure 25 shows a top plan view corresponding to Figure 8 but part way into a voxel colouring process (so that some voxels have already been removed) to illustrate the effect of adding camera positions. The initial camera positions A to D are represented in Figure 25 by the corresponding focal points $F_A$ to $F_D$ and the imaging areas $IM_A$ to $IM_D$ while additional camera positions E to H are represented in Figure 25 by the focal points $F_E$ to $F_H$ and the imaging areas $IM_E$ to $IM_H$.

The effect of adding the four additional camera positions E to H will now be described for the four voxels VA to VD shown coloured black in Figure 25. Thus, voxel VA is visible at only one of the original four camera positions, that is camera position B, because intervening voxels occlude voxel VA as far as the other three camera positions A, C and D are concerned. For example, voxel VX amongst others occludes voxel VA from camera position C. Similarly, voxel VD is visible only at camera position B of the four original camera positions while voxel VB is visible at camera positions C and D and voxel VC is visible at camera position A. Thus, when only the four camera positions A to D are provided, it is not possible to determine the photoconsistency of voxels VA and VC because they are only visible at a single camera position. In contrast, when the additional four camera positions E to H are added, voxel VA becomes visible at camera positions B, E and F while voxel VC becomes visible at camera positions D, G and H enabling the photoconsistency of these two voxels to be checked. Voxel VD is visible at two of the four original camera positions and so its photoconsistency can be checked without the additional camera positions. However, when the additional camera positions are added, voxel VD also becomes visible at camera position E so that the voxel VD is visible from three camera positions which should enable a more accurate determination as to whether the voxel VD forms part of the 3D object surface or not. Similarly, voxel VB which was visible at two of the original camera positions C and D becomes visible at four camera positions B, C, F and G when the four additional camera positions are added which should again enable greater accuracy in determining whether or not the voxel forms part of the 3D object surface.

In the arrangement shown in Figure 25, the additional camera positions are provided intermediate the original four camera positions. A further additional camera position may, for example, be provided looking directly down onto the top of the object. The manner in which additional camera positions are added may be determined by the CPU 22 in accordance with a pre-stored algorithm. For example, as shown in Figure 25, each set of additional camera positions may add a camera position intermediate each pair of adjacent camera positions. Alternatively or additionally, the addition of camera positions may be under the control of the user so that, for example, at step S307 in Figures 21 and 23, the user determines the selection of the additional image (and thus the camera position) on the basis of the current estimate of the 3D object surface. This enables the user to add additional camera positions at the points where he can see from visual inspection of the estimated 3D object surface that further information is required so as to better define the 3D object surface.

As can be seen, the likelihood of a voxel that is not actually on the surface of the 3D object being erroneously retained will reduce with increase in the number of images used. Thus, the methods described above enable further refinement of the generated 3D object surface so as to bring it into closer agreement with the actual 3D object surface without significantly increasing the amount of data that needs to be stored at any one time by the main processing unit.

As described above, a single new image is added for each successive voxel colouring process. However, instead of adding a single new image, a set of new images may be added. Thus, for example, images recorded at all or subsets of the additional camera positions shown in Figure 25a may be added simultaneously at step S303 in Figure 21 and step S303a in Figure 23 and the further voxel colouring processes of steps S301a and S301b carried out using all simultaneously added new images.

In the embodiment described with reference to Figures 23 to 24b, where a set of previous images are retained for carrying out the further voxel colouring process, the set of previous images may consist simply of the last used x images or may consist of images that are strategically important in the voxel colouring process. These images may be selected by the user. Thus, for example, at step S303a in Figure 23, the CPU 22 may display to the user on display 25 a message requesting the user to select from the currently stored images the images to be retained for the next voxel colouring process.

It will be appreciated that the initial voxel space defining process described above with reference to Figures 3 to 11 may be used with the voxel colouring process described with reference to Figures 12a and 12b, or Figures 12a and 12b as modified by Figure 17 or Figure 18 or the voxel colouring process as described above with reference to Figures 18 and 12b or any conventional voxel colouring process. Similarly, the iterative voxel colouring processes described above with reference to Figures 21 to 22a or 23 to 24 may be used in combination with the modifications described above with reference to Figures 15, 17 and 18.

The voxel colouring processes described above with reference to Figures 12a, 12b and 15, Figures 12a, 12b and 17 or Figures 18 and 12b may be used where the initial voxel space is defined in the manner described in the aforementioned University of Rochester Computer Sciences Technical Report or any other conventional process for defining the initial voxel space, for example by setting the initial voxel space as a volume known by a user to be sufficiently large to encompass the object whose 3D surface is to be generated. Similarly, the iterative voxel colouring processes described above with reference to Figures 21 to 22b or Figures 23 to 24 may be used with such known initial voxel space defining techniques. The initial voxel space or resulting 3D object surface data may be downloaded onto a storage medium such as a disc or supplied as a signal over, for example, a network.

Once the 3D object surface has been generated and stored by the CPU in the mass-storage system 25, then, if desired or required, the texture data generation module 14 shown in Figure 1 may be used to generate texture data from the input image data showing the object for rendering the 3D object surface produced as described above. The texture data generation module may form part of the same image processing apparatus or may be provided by a separate image processing apparatus to which the 3D object surface data is downloaded from a storage medium or supplied as a signal.

It will, of course, be appreciated that the focal length of a camera may be so long that, in practice, the viewing cone of the camera can be represented by a viewing volume in which the rays defining the viewing volume are parallel or substantially parallel to one another.

ANNEX A

1. CORNER DETECTION

1.1 Summary

This process described below calculates corner points, to sub-pixel accuracy, from a single grey scale or colour image. It does this by first detecting edge boundaries in the image and then choosing corner points to be points where a strong edge changes direction rapidly. The method is based on the facet model of comer detection, described in Haralick and Shapiro[i].

1.2 Algorithm

The algorithm has four stages:

    (1) Create grey scale image (if necessary);
    (2) Calculate edge strengths and directions;
    (3) Calculate edge boundaries;

(4) Calculate comer points.

### 1.2.1 Create grey scale image

The comer detection method works on grey scale images. For colour images, the colour values are first converted to floating point grey scale values using the formula:

$$grey\_scale = (0.3 \times red) + (0.59 \times green) + (0.11 \times blue) \qquad A\text{-}1$$

This is the standard definition of brightness as defined by NTSC and described in Foley and van Dam[ii].

### 1.2.2 Calculate edge strengths and directions

The edge strengths and directions are calculated using the $7 \times 7$ integrated directional derivative gradient operator discussed in section 8.9 of Haralick and Shapiro[j].
The row and column forms of the derivative operator are both applied to each pixel in the grey scale image. The results are combined in the standard way to calculate the edge strength and edge direction at each pixel.
The output of this part of the algorithm is a complete derivative image.

### 1.2.3 Calculate edge boundaries

The edge boundaries are calculated by using a zero crossing edge detection method based on a set of $5 \times 5$ kernels describing a bivariate cubic fit to the neighbourhood of each pixel.
The edge boundary detection method places an edge at all pixels which are close to a negatively sloped zero crossing of the second directional derivative taken in the direction of the gradient, where the derivatives are defined using the bivariate cubic fit to the grey level surface. The subpixel location of the zero crossing is also stored along with the pixel location.
The method of edge boundary detection is described in more detail in section 8.8.4 of Haralick and Shapiro[j].

### 1.2.4 Calculate corner points

The corner points are calculated using a method which uses the edge boundaries calculated in the previous step.
Corners are associated with two conditions:

(1) the occurrence of an edge boundary; and
(2) significant changes in edge direction.

Each of the pixels on the edge boundary is tested for "cornerness" by considering two points equidistant to it along the tangent direction. If the change in the edge direction is greater than a given threshold then the point is labelled as a corner. This step is described in section 8.10.1 of Haralick and Shapiro'.
Finally the corners are sorted on the product of the edge strength magnitude and the change of edge direction. The top 200 comers which are separated by at least 5 pixels are output.

### 2. FEATURE TRACKING

### 2.1 Summary

This process described below tracks feature points (typically corners) across a sequence of grey scale or colour images.
The tracking method uses a constant image velocity Kalman filter to predict the motion of the corners, and a correlation based matcher to make the measurements of corner correspondences.
The method assumes that the motion of comers is smooth enough across the sequence of input images that a constant velocity Kalman filter is useful, and that corner measurements and motion can be modelled by gaussians.

2.2 Algorithm

1) Input corners from an image.
2) Predict forward using Kalman filter.
3) If the position uncertainty of the predicted corner is greater than a threshold, $\Delta$, as measured by the state positional variance, drop the corner from the list of currently tracked corners.
4) Input a new image from the sequence.
5) For each of the currently tracked corners:

   a) search a window in the new image for pixels which match the corner;
   b) update the corresponding Kalman filter, using any new observations (i.e. matches).

6) Input the corners from the new image as new points to be tracked (first, filtering them to remove any which are too close to existing tracked points).
7) Go back to (2)

2.2.1 Prediction

This uses the following standard Kalman filter equations for prediction, assuming a constant velocity and random uniform gaussian acceleration model for the dynamics:

$$X_{n+1} = \Theta_{n+1,n} X_n \qquad\qquad \text{A-2}$$

$$K_{n+1} = \Theta_{n+1,n} \Theta^{T}_{n+1,n} + Q_n \qquad\qquad \text{A-3}$$

where X is the 4D state of the system, (defined by the position and velocity vector of the corner), K is the state covariance matrix, $\Theta$ is the transition matrix, and Q is the process covariance matrix.
In this model, the transition matrix and process covariance matrix are constant and have the following values:

$$\Theta_{n+1,n} = \begin{pmatrix} I & I \\ 0 & I \end{pmatrix} \qquad\qquad ....\text{A-4}$$

$$Q_n = \begin{pmatrix} 0 & 0 \\ 0 & \sigma_v^2 I \end{pmatrix} \qquad\qquad ....\text{A-5}$$

2.2.2 Searching and matching

This uses the positional uncertainty (given by the top two diagonal elements of the state covariance matrix, K) to define a region in which to search for new measurements (i.e. a range gate).
The range gate is a rectangular region of dimensions:

$$\Delta x = \sqrt{K_{11}}, \ \Delta y = \sqrt{K_{22}} \qquad\qquad \text{A-6}$$

The correlation score between a window around the previously measured comer and each of the pixels in the range gate is calculated.

The two top correlation scores are kept.

If the top correlation score is larger than a threshold, $C_0$, and the difference between the two top correlation scores is larger than a threshold, $\Delta C$, then the pixel with the top correlation score is kept as the latest measurement.

### 2.2.3 Update

The measurement is used to update the Kalman filter in the standard way:

$$G = KH^T(HKH^T+R)^{-1} \qquad \text{A-7}$$

$$X \rightarrow X + G(\hat{X} - HX) \qquad \text{A-8}$$

$$K \rightarrow (I - GH)K \qquad \text{A-9}$$

where G is the Kalman gain, H is the measurement matrix, and R is the measurement covariance matrix.

In this implementation, the measurement matrix and measurement covariance matrix are both constant, being given by:

$$H = (I\ 0) \qquad \text{A-10}$$

$$R = \sigma^2 I \qquad \text{A-11}$$

### 2.2.4 Parameters

The parameters of the algorithm are:

Initial conditions: $X_0$ and $K_0$.
Process velocity variance: $\sigma_V^2$.
Measurement variance: $\sigma^2$.
Position uncertainty threshold for loss of track: $\Delta$.
Covariance threshold: $C_0$.
Matching ambiguity threshold: $\Delta C$.

For the initial conditions, the position of the first corner measurement and zero velocity are used, with an initial covariance matrix of the form:

$$K_0 = \begin{pmatrix} 0 & 0 \\ 0 & \sigma_0^2\ I \end{pmatrix} \qquad ....\text{A-12}$$

$\sigma_0^2$ is set to $\sigma_0^2 = 200(\text{pixels/frame})^2$.

The algorithm's behaviour over a long sequence is anyway not too dependent on the initial conditions.

The process velocity variance is set to the fixed value of 50 $(\text{pixels/frame})^2$. The process velocity variance would have to be increased above this for a hand-held sequence. In fact it is straightforward to obtain a reasonable value for the process velocity variance adaptively.

The measurement variance is obtained from the following model:

$$\sigma^2=(rK+a) \qquad \text{A-13}$$

where $K = \sqrt{(K_{11}K_{22})}$ is a measure of the positional uncertainty, "r" is a parameter related to the likelihood of obtaining an outlier, and "a" is a parameter related to the measurement uncertainty of inliers. "r" and "a" are set to r=0. 1 and a=1.0.

This model takes into account, in a heuristic way, the fact that it is more likely that an outlier will be obtained if the range gate is large.

The measurement variance (in fact the full measurement covariance matrix R) could also be obtained from the behaviour of the auto-correlation in the neighbourhood of the measurement. However this would not take into account the likelihood of obtaining an outlier.

The remaining parameters are set to the values: $\Delta$=400 pixels$^2$, $C_0$=0.9 and $\Delta C$=0.001.

## 3. 3D SURFACE GENERATION

### 3.1 Architecture

In the method described below, it is assumed that the object can be segmented from the background in a set of images completely surrounding the object. Although this restricts the generality of the method, this constraint can often be arranged in practice, particularly for small objects.

The method consists of five processes, which are run consecutively:

- First, for all the images in which the camera positions and orientations have been calculated, the object is segmented from the background, using colour information. This produces a set of binary images, where the pixels are marked as being either object or background.

- The segmentations are used, together with the camera positions and orientations, to generate a voxel carving, consisting of a 3D grid of voxels enclosing the object. Each of the voxels is marked as being either object or empty space.

- The voxel carving is turned into a 3D surface triangulation, using a standard triangulation algorithm (marching cubes).

- The number of triangles is reduced substantially by passing the triangulation through a decimation process.

- Finally the triangulation is textured, using appropriate parts of the original images to provide the texturing on the triangles.

### 3.2 Segmentation

The aim of this process is to segment an object (in front of a reasonably homogeneous coloured background) in an image using colour information. The resulting binary image is used in voxel carving.

Two alternative methods are used:

Method 1: input a single RGB colour value representing the background colour - each RGB pixel in the image is examined and if the Euclidean distance to the background colour (in RGB space) is less than a specified threshold the pixel is labelled as background (BLACK).

Method 2: input a "blue" image containing a representative region of the background.

The algorithm has two stages:

(1) Build a hash table of quantised background colours
(2) Use the table to segment each image.

Step 1) Build hash table
Go through each RGB pixel, "p", in the "blue" background image.
Set "q" to be a quantised version of "p". Explicitly:

$$q = (p+t/2)/t \qquad \text{A-14}$$

where "t" is a threshold determining how near RGB values need to be to background colours to be labelled as background.

The quantisation step has two effects:

1) reducing the number of RGB pixel values, thus increasing the efficiency of hashing;
2) defining the threshold for how close an RGB pixel has to be to a background colour pixel to be labelled as background.

q is now added to a hash table (if not already in the table) using the (integer) hashing function:

$$h(q) = (q\_red\&7)*2^6+(q\_green\&7)*2^3+(q\_blue\&7) \qquad \text{A-15}$$

That is, the 3 least significant bits of each colour field are used. This function is chosen to try and spread out the data into the available bins. Ideally each bin in the hash table has a small number of colour entries. Each quantised colour RGB triple is only added once to the table (the frequency of a value is irrelevant).

Step 2) Segment each image

Go through each RGB pixel, "v", in each image.

Set "w" to be the quantised version of "v" as before.

To decide whether "w" is in the hash table, explicitly look at all the entries in the bin with index h(w) and see if any of them are the same as "w". If yes, then "v" is a background pixel - set the corresponding pixel in the output image to BLACK. If no then "v" is a foreground pixel - set the corresponding pixel in the output image to WHITE.

Post processing: for both methods a post process is performed to fill small holes and remove small isolated regions.

A median filter is used with a circular window. (A circular window is chosen to avoid biasing the result in the x or y directions.)

Build a circular mask of radius "r". Explicitly store the start and end values for each scan line on the circle.

Go through each pixel in the binary image.

Place the centre of the mask on the current pixel. Count the number of BLACK pixels and the number of WHITE pixels in the circular region.

If (#WHITE pixels$\geq$ #BLACK pixels) then set corresponding output pixel to WHITE. Otherwise output pixel is BLACK.

### 3.3. Voxel carving

The aim ofthis process is to produce a 3D voxel grid, enclosing the object, with each of the voxels marked as either object or empty space.

The input to the algorithm is:

- a set ofbinary segmentation images, each of which is associated with a camera position and orientation;

- 2 sets of 3D co-ordinates, (xmin, ymin, zmin) and (xmax, ymax, zmax), describing the opposite vertices of a cube surrounding the object;

- a parameter, "n", giving the number of voxels required in the voxel grid.

A pre-processing step calculates a suitable size for the voxels (they are cubes) and the 3D locations of the voxels, using "n", (xmin, ymin, zmin) and (xmax, ymax, zmax).

Then, for each of the voxels in the grid, the mid-point of the voxel cube is projected into each of the segmentation images. If the projected point falls onto a pixel which is marked as background, on any of the images, then the corresponding voxel is marked as empty space, otherwise it is marked as belonging to the object.

Voxel carving is described further in "Rapid Octree Construction from Image Sequences" by R. Szeliski in CVGIP: Image Understanding, Volume 58, Number 1, July 1993, pages 23-32.

3.4 Marching cubes

The aim of the process is to produce a surface triangulation from a set of samples of an implicit function representing the surface (for instance a signed distance function). In the case where the implicit function has been obtained from a voxel carve, the implicit function takes the value -1 for samples which are inside the object and +1 for samples which are outside the object.

Marching cubes is an algorithm that takes a set of samples of an implicit surface (e.g. a signed distance function) sampled at regular intervals on a voxel grid, and extracts a triangulated surface mesh. Lorensen and Cline[iii] and Bloomentahl[iv] give details on the algorithm and its implementation.

The marching-cubes algorithm constructs a surface mesh by "marching" around the cubes while following the zero crossings of the implicit surface f(x)=0, adding to the triangulation as it goes. The signed distance allows the marching-cubes algorithm to interpolate the location of the surface with higher accuracy than the resolution of the volume grid. The marching cubes algorithm can be used as a continuation method (i.e. it finds an initial surface point and extends the surface from this point).

3.5 Decimation

The aim of the process is to reduce the number of triangles in the model, making the model more compact and therefore easier to load and render in real time.

The process reads in a triangular mesh and then randomly removes each vertex to see if the vertex contributes to the shape of the surface or not. (i.e. if the hole is filled, is the vertex a "long" way from the filled hole). Vertices which do not contribute to the shape are kept out of the triangulation. This results in fewer vertices (and hence triangles) in the final model.

The algorithm is described below in pseudo-code.

```
INPUT
Read in vertices
Read in triples of vertex IDs making up triangles
PROCESSING
Repeat NVERTEK times

    Choose a random vertex, V, which hasn't been chosen before
    Locate set of all triangles having V as a vertex, S
    Order S so adjacent triangles are next to each other
    Re-triangulate triangle set, ignoring V(i, e. remove selected triangles
    & V and then fill in hole)
    Find the maximum distance between V and the plane of each triangle
    If (distance < threshold)
        Discard V and keep new triangulation
    Else
        Keep V and return to old triangulation

OUTPUT
Output list of kept vertices
Output updated list of triangles
```

The process therefore combines adjacent triangles in the model produced by the marching cubes algorithm, if this can be done without introducing large errors into the model.

The selection of the vertices is carried out in a random order in order to avoid the effect of gradually eroding a large part of the surface by consecutively removing neighbouring vertices.

3.6 Further Surface Generation Techniques

Further techniques which may be employed to generate a 3D computer model of an object surface include voxel colouring, for example as described in "Photorealistic Scene Reconstruction by Voxel Coloring" by Seitz and Dyer in Proc. Conf. Computer Vision and Pattern Recognition 1997, p1067-1073, "Plenoptic Image Editing" by Seitz and Kutulakos in Proc. 6th International Conference on Computer Vision, pp 17-24, "What Do N Photographs Tell Us About 3D Shape?" by Kutulakos and Seitz in University of Rochester Computer Sciences Technical Report 680, January 1998, and "A Theory of Shape by Space Carving" by Kutulakos and Seitz in University of Rochester Computer Sciences Technical Report 692, May 1998.

4. TEXTURING

The aim of the process is to texture each surface polygon (typically a triangle) with the most appropriate image texture. The output of the process is a VRML model of the surface, complete with texture co-ordinates.

The triangle having the largest projected area is a good triangle to use for texturing, as it is the triangle for which the texture will appear at highest resolution.

A good approximation to the triangle with the largest projected area, under the assumption that there is no substantial difference in scale between the different images, can be obtained in the following way.

For each surface triangle, the image "i" is found such that the triangle is the most front facing (i.e. having the greatest value for $\mathbf{n_t} \cdot \mathbf{v_i}$, where $\mathbf{n_t}$ is the triangle normal and $\mathbf{v_i}$ is the viewing direction for the "i"th camera). The vertices of the projected triangle are then used as texture co-ordinates in the resulting VRML model.

This technique can fail where there is a substantial amount of self-occlusion, or several objects occluding each other. This is because the technique does not take into account the fact that the object may occlude the selected triangle. However, in practice this does not appear to be much of a problem.

It has been found that, if every image is used for texturing then this can result in very large VRML models being produced. These can be cumbersome to load and render in real time. Therefore, in practice, a subset of images is used to texture the model. This subset may be specified in a configuration file.

References

i   R M Haralick and L G Shapiro: "Computer and Robot Vision Volume 1", Addison-Wesley, 1992, ISBN 0-201-10877-1 (v.1), section 8.

ii  J Foley, A van Dam, S Feiner and J Hughes: "Computer Graphics: Principles and Practice", Addison-Wesley, ISBN 0-201-12110-7.

iii W.E. Lorensen and H.E. Cline: "Marching Cubes: A High Resolution 3D Surface Construction Algorithm", in Computer Graphics, SIGGRAPH 87 proceedings, 21: 163-169, July 1987.

iv  J. Bloomenthal: "An Implicit Surface Polygonizer", Graphics Gems IV, AP Professional, 1994, ISBN 0123361559, pp 324-350.

**Claims**

1. A method of operating an image processing apparatus for processing image data representing images of an object taken from a plurality of different camera positions, the method comprising the steps of:

   (a) determining the viewing volume for each camera position;
   (b) determining the volume bounded by the intersection of the viewing volumes; and
   (c) setting the bounded volume as an initial space for use in deriving a representation of a three-dimensional surface of the object using said images.

2. A method according to claim 1, further comprising the step (d) of dividing the bounded volume into voxels to form an initial voxel space.

3. A method according to claim 2, further comprising:

   (e) determining, for each voxel that is not occluded by another voxel, the area corresponding to that voxel in each image in which that voxel is visible;
   (f) comparing characteristics of each of the image areas corresponding to the same voxel;
   (g) removing a voxel in response to the characteristics of the image areas corresponding to that voxel being inconsistent.

4. A method according to claim 3, further comprising the step of:

(h) repeating steps (e) to (g) until all non-occluded voxels having inconsistent characteristics have been removed.

5. In an image processing apparatus having a processor for processing image data representing images of an object taken from a plurality of different camera positions, a method of processing image data to derive a representation of a three-dimensional surface of the object, the method comprising the steps of:

(a) determining the viewing volume for each camera position at which an image was taken;

(b) determining the volume bounded by the intersection of the viewing volumes;

(c) defining the bounded volume as an initial voxel space formed of voxels;

(d) determining, for each voxel of the voxel space that is not occluded by another voxel, the area corresponding to that voxel in each image in which that voxel is represented;

(e) comparing characteristics of each of the image areas corresponding to the same voxel;

(f) removing a voxel in response to the characteristics of the image areas corresponding to that voxel being inconsistent.

6. A method according to claim 5, further comprising the step:

(g) of repeating steps (d) to (f) until all non-occluded voxels having inconsistent characteristics have been removed.

7. A method according to any one of the preceding claims, wherein the step of determining the viewing volume for a camera position comprises determining the viewing volume using data representing a camera focal point and a camera imaging area for that camera position.

8. A method according to claim 7, wherein the step of determining the viewing volume includes projecting straight lines from the focal point through points on the boundary of the imaging area.

9. A method according to any one of the preceding claims, wherein the step of defining the intersection of the viewing volumes comprises (i) determining an initial intersection of the viewing volumes of first and second camera positions, (ii) determining the intersection of that intersection with another viewing volume and setting that intersection as the current intersection and (iii) repeating steps (i) and (ii) until the viewing volumes for all camera positions have been considered.

10. In an image processing apparatus having a processor for processing image data representing images of an object taken from a plurality of different camera positions, a method of processing image data to derive a representation of a three-dimensional surface of the object, the method comprising the steps of:

(a) defining a volume containing the object as an initial space formed of voxels;

(b) accessing data representing a first set of images of the object each recorded at a different camera position with respect to the object;

(c) determining, for each voxel of the voxel space that is not occluded by another voxel, the area corresponding to that voxel in each image of the first set of images in which that voxel is visible;

(d) comparing characteristics of each of the image areas corresponding to the same voxel;

(e) removing a voxel in response to the characteristics of the image areas corresponding to that voxel being inconsistent thereby producing a smaller voxel volume;

(g) accessing data representing a further image of the object recorded at a different camera position from the first set of images;

(h) determining, for each voxel of the voxel space that is not occluded by another voxel, the area corresponding to that voxel in the further image;

(i) comparing the characteristic of the image area of the further image with the characteristic already associated with that voxel; and

(j) removing a voxel in response to an inconsistency in the compared characteristics, thereby producing a smaller voxel space.

11. A method according to claim 10, further comprising the step:

(f) of repeating steps (c) to (e) until all non-occluded voxels having inconsistent characteristics have been removed and storing the resulting voxel space as a representation of the three-dimensional object surface, together with the characteristic associated with each non-occluded voxel of the resulting voxel space.

**12.** A method according to claim 10 or 11, further comprising the step of:
(k) repeating steps (h) to (j) until all non-occluded voxels having inconsistent characteristics have been removed and storing the resulting voxel space as a modified representation of the three-dimensional object surface.

**13.** A method according to claim 12, which further comprises repeating steps (g) to (k) for each of a series of further images.

**14.** A method according to any one of claims 8 to 13, which further comprises discarding the first set of images after step (f).

**15.** A method according to any one of claims 8 to 14, which comprises carrying out steps (g) to (j) by:

accessing data representing a number of further images of the object recorded at different camera positions from one another and the first set of images at step (g);
determining, for each voxel of the voxel space that is not occluded by another voxel, the area corresponding to that voxel in each of the further images at step (h);
comparing the characteristics of the image areas of the further images with the characteristic already associated with that voxel at step (i);
removing a voxel in response to an inconsistency in the compared characteristics thereby producing a smaller voxel space at step (j).

**16.** In an image processing apparatus having a processor for processing image data representing images of an object taken from a plurality of different camera positions, a method of processing image data to derive a representation of a three-dimensional surface of the object, the method comprising the steps of:

(a) defining a volume containing the object as an initial voxel space formed of voxels;
(b) accessing data representing a first set of images of the object each recorded at a different camera position with respect to the object;
(c) determining, for each voxel of the voxel space that is not occluded by another voxel, the area corresponding to that voxel in each image of the first set of images in which that voxel is visible;
(d) comparing characteristics of each of the image areas corresponding to the same voxel;
(e) removing a voxel in response to the characteristics of the image areas corresponding to that voxel being inconsistent, thereby producing a smaller voxel volume;
(g) accessing data representing a second set of images consisting of a sub-set of the first set and a further image of the object recorded at a different camera position from the first set of images;
(h) determining, for each voxel of the voxel space that is not occluded by another voxel, the area corresponding to that voxel in each of the second set of images;
(i) comparing the characteristics of the image areas in each of the second set of images; and
(j) removing a voxel in response to an inconsistency in the compared characteristics, thereby producing a smaller voxel space

**17.** A method according to claim 16, further comprising the step:
(f) of repeating steps (c) to (e) until all non-occluded voxels having inconsistent characteristics have been removed and storing the resulting voxel space as a representation of the three-dimensional object surface, together with the characteristic associated with each non-occluded voxel of the resulting voxel space.

**18.** A method according to claim 16 or 17, further comprising the step:
(k) of repeating steps (h) to (j) until all non-occluded voxels having inconsistent characteristics have been removed and storing the resulting voxel space as a modified representation of the three-dimensional object surface.

**19.** A method according to claim 18, which further comprises repeating steps (g) to (k) for each of a series of further images and changing the second set of images accessed in step (g) with each repetition.

**20.** A method according to claim 19, which comprises changing the second set of images at each repetition by adding a further image from the first set of images.

**21.** A method according to claim 19, which comprises changing the second set of images at each repetition by discarding at least one of the sub-set of the first set and including in the second set the further image accessed at the previous step (g).

**22.** In an image processing apparatus having a processor for processing image data representing images of an object taken from a plurality of different camera positions, a method of processing image data to derive a representation of a three-dimensional surface of the object, the method comprising the steps of:

> (a) defining an initial volume containing the object surface as an initial space formed of voxels;
> (b) accessing data representing images of the object recorded at different camera positions with respect to the object;
> (c) checking to see if a voxel meets at least one criterion by projecting that voxel into at least one of the images;
> (d) if the voxel does not meet said at least one criterion, dividing the voxel into subsidiary voxels; and
> (e) then checking to see if the subsidiary voxels meets at least one criterion by projecting the subsidiary voxels into at least one of the images.

**23.** A method according to claim 22, further comprising deciding that a sub-voxel does not form part of the three-dimensional surface and so should be removed if the sub-voxel does not meets said at least one criterion.

**24.** A method according to claim 22, further comprising repeating steps c, d and e for any sub-voxel that does not meet said at least one criterion.

**25.** A method according to claim 22, 23 or 24, wherein the at least one criterion comprises any one or more of the following:

> 1) the colour variance in a pixel patch to which the voxel projects in an image has a value lower than a predetermined value;
> 2) the difference in colour or average colour between pixel patches to which the voxel projects in different images has a standard deviation less than a predetermined value; and
> 3) the voxel is not partially occluded by a voxel or subsidiary voxels of smaller size than the voxel.

**26.** In an image processing apparatus having a processor for processing image data representing images of an object taken from a plurality of different camera positions, a method of processing image data to derive a representation of a three-dimensional surface of the object, the method comprising the steps of:

> (a) defining an initial volume containing the object surface as an initial space formed of voxels;
> (b) accessing data representing images of the object recorded at different camera positions with respect to the object;
> (c) determining the area corresponding to a given voxel in each image in which the voxel is visible;
> (d) comparing characteristics of each of the image areas corresponding to the given voxel;
> (e) deriving from the compared characteristics a value representing the degree of any inconsistency between the characteristics of the image areas corresponding to the given voxel;
> (f) sub-dividing a voxel into subsidiary voxels in response to the derived value exceeding a threshold value and repeating steps (c) to (e) for each subsidiary voxel.

**27.** A method according to claim 26, further comprising:

> (g) in response to a subsidiary voxel having a derived value exceeding a threshold value and a size greater than a minimum size, sub-dividing that subsidiary voxel into subsidiary voxels and repeating steps (c) to (e) for each subsidiary voxel of that subsidiary voxel; and
> (h) removing any subsidiary voxel of the minimum size having a derived value exceeding the threshold value.

**28.** A method according to claim 26 or 27, which comprises repeating steps (c) to (h) until the degree of inconsistency for all non-occluded voxels and subsidiary voxels is below a predetermined value.

**29.** In an image processing apparatus having a processor for processing image data representing images of an object taken from a plurality of different camera positions, a method of processing image data to derive a representation of a three-dimensional surface of the object, the method comprising the steps of:

(a) defining an initial volume containing the object surface as an initial space formed of voxels;
(b) accessing data representing images of the object recorded at different camera positions with respect to the object which data provides a colour value for each pixel of each image;
(c) determining the area corresponding to a voxel in each image in which the voxel is visible;
(d) determining a colour space value for each pixel of each area where each colour space value encompasses a range of pixel colour values;
(e) comparing the colour space values for each of the image areas corresponding to the same voxel; and
(f) removing the voxel only if the image areas do not share at least one colour space value.

30. In an image processing apparatus having a processor for processing image data representing images of an object taken from a plurality of different camera positions, a method of processing image data to derive a representation of a three-dimensional surface of the object, the method comprising the steps of:

(a) defining an initial volume containing the object surface as an initial space formed of voxels;
(b) determining the area corresponding to a voxel in each image in which that voxel is visible;
(c) comparing characteristics of each of the image areas corresponding to the voxel; and when the derived value for a voxel exceeds a threshold value:

(i) sub-dividing the voxel into subsidiary voxels;
(ii) determining the region corresponding to each sub-voxel in each image in which that sub-voxel is visible;
(iii) comparing characteristics of the image regions; and
(iv) removing the voxel only if there is no set of regions which contains a region from each image and for which the characteristics are not inconsistent.

31. A method according to any one of claims 3 to 30, wherein the step of determining the area corresponding to a voxel in an image comprises projecting the voxel into each image.

32. A method according to any of claims 3 to 31, wherein the step of comparing characteristics of the image areas or regions comprises comparing colours of the image areas or regions.

33. A method according to any one of claims 3 to 32, which further comprises outputting a signal carrying data defining the initial space or the voxel representation of the three-dimensional object surface.

34. A method according to any one of claims 3 to 33, which further comprises providing a computer storage medium storing data defining the initial space or the voxel representation of the three-dimensional object surface.

35. A method according to any one of claims 3 to 34, further comprising generating texture data for rendering onto the representation of the three-dimensional object surface.

36. An image processing apparatus for processing image data representing images of an object taken from a plurality of different camera positions, the apparatus comprising:

means for determining the viewing volume for each camera position;
means for determining the volume bounded by the intersection of the viewing volumes; and
means for setting the bounded volume as an initial space for use in deriving a representation of a three-dimensional surface of the object using said images.

37. Apparatus according to claim 36, further comprising means for dividing the bounded volume into voxels to form an initial voxel space.

38. Apparatus according to claim 37, further comprising processor means operable:

(i) to determine, for each voxel that is not occluded by another voxel, the area corresponding to that voxel in each image in which that voxel is visible;
(ii) to compare characteristics of each of the image areas corresponding to the same voxel; and
(iii) to remove each non-occluded voxel having inconsistent image area characteristics so as to provide a representation of the three-dimensional object surface.

39. An image processing apparatus for processing image data representing images of an object taken from a plurality of different camera positions to derive a representation of a three-dimensional surface of the object, the apparatus comprising:

means for determining the viewing volume for each camera position at which an image was taken;
means for determining the volume bounded by the intersection of the viewing volumes;
means for dividing the bounded volume into voxels to form an initial voxel space; and
processor means operable:

(i) to determine, for a voxel that is not occluded by another voxel, the area corresponding to that voxel in each image in which that voxel is represented;
(ii) to compare characteristics of each of the image areas corresponding to the same voxel; and
(iii) to remove a voxel when the characteristics of the image areas corresponding to that voxel are inconsistent.

40. Apparatus according to any one of claims 36 to 39, wherein the means for determining the viewing volume for a camera position is arranged to determine the viewing volume using data representing a camera focal point and camera imaging area for that camera position.

41. Apparatus according to claim 40, wherein means for determining the viewing volume includes means for projecting straight lines from the focal point through points on the boundary of the imaging area.

42. Apparatus according to any one of claims 36 to 41, wherein the means for defining the intersection of the viewing volumes is arranged (i) to determine an initial intersection of the viewing volumes of first and second camera positions, (ii) to determine the intersection of that intersection with another viewing volume and to set that intersection as the current intersection and (iii) to repeat (i) and (ii) until the viewing volumes for all camera positions have been considered.

43. An image processing apparatus for processing image data representing images of an object taken from a plurality of different camera positions to derive a representation of a three-dimensional surface of the object, the apparatus comprising:

means for defining an initial volume containing the object as an initial space formed of voxels, and processor means operable:

(i) to access data representing a first set of images of the object each recorded at a respective one of a number of different camera positions with respect to the object;
(ii) to determine, for each voxel of the voxel space that is not occluded by another voxel, the area corresponding to that voxel in each image of the first set of images in which that voxel is visible;
(iii) to compare characteristics of each of the image areas corresponding to the same voxel to remove any voxel have inconsistent characteristics and to store the resulting voxel space as a representation of the three-dimensional object surface, together with the characteristic associated with each non-occluded voxel of the resulting voxel space;
(iv) then to access data representing a further image of the object recorded at a different camera position from the first set of images;
(v) to determine, for each voxel of the voxel space that is not occluded by another voxel, the area corresponding to that voxel in the further image;
(vi) to compare the characteristic of the image area in the further image with the characteristic already associated with that voxel;
(vii) to remove any voxel for which the characteristic of the image area of the further image is inconsistent with that already associated with that voxel; and
(viii) to store the resulting voxel space as modified representation of the three-dimensional object surface.

44. An apparatus according to claim 43, wherein the processor means is operable to carry out steps (iv) to (viii) for each of a series of further images.

45. An apparatus according to claim 43 or claim 44, wherein the processor means is operable to cause the first set of images to be discarded after the processor means has stored the resulting voxel space.

46. An apparatus according to claim 43, 44 or 45, wherein the processor means is operable to access data representing a plurality of further images and to carry out steps (iv) to (viii) using all of the further images.

47. An image processing apparatus for processing image data representing images of an object taken from a plurality of different camera positions to derive a representation of a three-dimensional surface of the object, the apparatus comprising:

means for defining an initial volume containing the object as an initial voxel space formed of voxels; and processor means operable:

(i) to access data representing a first set of images of the object each recorded at a respective different one of a number of different camera positions with respect to the object;
(ii) to determine, for each voxel of the voxel space that is not occluded by another voxel, the area corresponding to that voxel in each image of the first set of images in which that voxel is visible;
(iii)to compare characteristics of each of the image areas corresponding to the same voxel;
(iv) to remove any voxel having inconsistent characteristics and to store the resulting voxel space as a representation of the three-dimensional object surface, together with the characteristic associated with each non-occluded voxel of the resulting voxel space;
(v) then to access data representing a second set of images consisting of a sub-set of the first set and a further image of the object recorded at a different camera position from the first set of images;
(vi) to determine, for each voxel of the voxel space that is not occluded by another voxel, the area corresponding to that voxel in each image of the second set;
(vii)to compare the characteristics of the image areas of second set;
(viii)to remove any voxel having inconsistent characteristics in the second set of images to store the resulting voxel space as an updated representation of the three-dimensional object surface.

48. Apparatus according to claim 47, wherein the processor means is operable repeat steps (v) to (viii) for each of a series of different sets of images.

49. Apparatus according to claim 48, wherein the processor means is operable to change the second set of images at each repetition by adding a further image not forming part of the first set of images.

50. Apparatus according to claim 48, wherein the processor means is operable to change the second set of images at each repetition by discarding at least one of the sub-set of the first set of images and to include in the second set at least one newly accessed further image.

51. In an image processing apparatus for processing image data representing images of an object taken from a plurality of different camera positions to derive a representation of a three-dimensional surface of the object, the apparatus comprising:

means for defining an initial volume containing the object surface as an initial space formed of voxels; means for accessing data representing images of the object recorded at different camera positions with respect to the object; and processor means operable:

(c) to check to see if a voxel meets at least one criterion by projecting that voxel into at least one of the images;
(d) if the voxel does not meet said at least one criterion, to divide the voxel into subsidiary voxels; and
(e) then to check to see if the subsidiary voxels meets at least one criterion by projecting the subsidiary voxels into at least one of the images.

52. Apparatus according to claim 51, wherein the processor means is operable to decide that a sub-voxel does not form part of the three-dimensional surface and so should be removed if the sub-voxel does not meets said at least one criterion.

53. Apparatus according to claim 51, wherein the processor means is operable to repeat c, d and e for any sub-voxel that does not meet said at least one criterion.

54. Apparatus according to claim 51, 52 or 53, wherein the at least one criterion comprises any one or more of the following:

4) the colour variance in a pixel patch to which the voxel projects in an image has a value lower than a predetermined value;
5) the difference in colour or average colour between pixel patches to which the voxel projects in different images has a standard deviation less than a predetermined value; and
6) the voxel is not partially occluded by a voxel or subsidiary voxels of smaller size than the voxel.

55. An image processing apparatus for processing image data representing images of an object taken from a plurality of different camera positions to derive a representation of a three-dimensional surface of the object, the apparatus comprising:

means for defining an initial volume containing the object surface as an initial space formed of voxels;
means for accessing data representing images of the object recorded at different camera positions with respect to the object; and
processor means operable:

(i) to determine the area corresponding to a given voxel in each image in which the voxel is visible;
(ii) to compare characteristics of each of the image areas corresponding to the given voxel;
(iii) to derive from the compared characteristics a value representing the degree of any inconsistency between the characteristics of the image areas corresponding to the given voxel;
(iv) to sub-divide a voxel into subsidiary voxels in response to the derived value exceeding a threshold value and to repeat steps (i) to (iii) for each subsidiary voxel;
(v) in response to a subsidiary voxel having a derived value exceeding a threshold value and a size greater than a minimum size, to sub-divide that subsidiary voxel into subsidiary voxels and to repeat (i) to (iii) for each subsidiary voxel of that subsidiary voxel; and
(vi) to remove any subsidiary voxel of the minimum size having a derived value exceeding the threshold value.

56. Apparatus according to claim 55, wherein the processor is operable:
(vii) to repeat (i) to (vi) for each voxel that is not occluded by another voxel to provide a representation of the three-dimensional object surface consisting of the remaining non-occluded voxels and subsidiary voxels.

57. Apparatus according to claim 56, wherein the processor means is operable to repeat (i) to (vi) until the degree of inconsistency for all non-occluded voxels is below a predetermined value.

58. An image processing apparatus for processing image data representing images of an object taken from a plurality of different camera positions to derive a representation of a three-dimensional surface of the object, the apparatus comprising:

means for defining an initial volume containing the object surface as an initial space formed of voxels;
means for accessing data representing images of the object recorded at different camera positions with respect to the object which data provides a colour value for each pixel of each image; and
processor means operable:

(a) to determine the area corresponding to a voxel in each image in which that voxel is visible;
(b) to determine a colour space value for each pixel of each area where each colour space value encompasses a range of pixel colour values;
(c) to compare the colour space values for each of the image areas corresponding to the same voxel; and
(d) to remove the voxel only if the image areas do not share at least one colour space value.

59. An image processing apparatus for processing image data representing images of an object taken from a plurality of different camera positions, a method of processing image data to derive a representation of a three-dimensional surface of the object, the apparatus comprising:

means for defining an initial volume containing the object surface as an initial space formed of voxels;
means for accessing data representing images of the object recorded at different camera positions with respect to the object; and
processor means operable:

(a) to determine the area corresponding to a voxel in each image in which that voxel is visible;
(b) to compare characteristics of each of the image areas corresponding to the same voxel; and
(c) to derive from the compared characteristics a value representing the degree of any inconsistency between the characteristics of the image areas corresponding to the voxel and, when the derived value for a voxel exceeds a threshold value,

(i) to sub-divide the voxel into subsidiary voxels,
(ii) to determine the region corresponding to each sub-voxel in each image in which that sub-voxel is visible,
(iii) to compare characteristics of the image regions, and
(iv) to remove the voxel only if there is no set of regions which contains a region from each image and for which the characteristics are not inconsistent.

60. Apparatus according to any one of claims 36 to 59, wherein the processor means is operable to determine, for each voxel of the voxel space that is not occluded by another voxel, the area corresponding to that voxel in each image in which that voxel is represented or visible by projecting the voxel into the image.

61. Apparatus according to any one of claims 36 to 59, wherein the processor means is operable to compare characteristics of each of the image areas corresponding to the same voxel by comparing the colours of each of the image areas.

62. Apparatus according to any of claims 36 to 61, further comprising means for outputting a signal carrying data defining the initial space or the voxel representation of the three-dimensional object surface.

63. Apparatus according to any of claims 36 to 62, further comprising means for providing a computer storage medium storing data defining the initial space or the voxel representation of the three-dimensional object surface.

64. Apparatus according to any of claims 36 to 63, further comparing means for generating texture data for rendering onto a representation of the three-dimensional object surface.

65. A method according to any of claims 22 to 30 or any one of claims 31 to 35 when dependent on any one of claims 22 to 30 which further comprises:
accessing data representing a further image of the object recorded at different camera position; and then repeating steps of any one of claims 22 to 30 using that further image.

66. A method according to any one of claims 22 to 30 or any one of claims 31 to 35 when dependent on any one of claims 22 to 30 which further comprises:

accessing data representing a set of images consisting of a sub-set of the images accessed at step (b) and a further image of the object recorded at a different camera position;
repeating steps of any one of claims 22 to 30 using that set of images.

67. A method according to any one of claims 10 to 30, 65 or 66 or claims 31 to 35 when dependent on any one of claims 10 to 30 which comprises defining the initial space using a method as set out in any one of claims 1 to 9.

68. Apparatus according to any of claims 54 to 59 or any one of claims 60 to 64 when dependent on any one of claims 54 to 59 wherein the processor means is also operable:
to access data representing a further image of the object recorded at a different camera position and then to repeat steps set out in any one of claims 54 to 59 using that further image.

69. Apparatus according to any one of claims 54 to 59 or any one of claims 60 to 64 when dependent on any one of claims 54 to 59, wherein the processor means is also operable:
to access data representing a set of images consisting of a sub-set of images previously accessed and a further image of the object recorded at a different camera position and then to repeat steps set out in any one of claims 54 to 59 using that set of images.

EP 1 109 131 A2

**70.** Apparatus according to any one of claims 54 to 59, 68 or 69 or claims 60 to 64 when dependent on any one of claims 43 to 59, wherein the processor means is operable to define the initial space as set out in any one of claims 36 to 42.

**71.** A storage medium carrying processor implementable instructions for causing processing means to carry out a method in accordance with any one of claims 1 to 31 or 65 to 67.

**72.** A signal carrying processor implementable instructions for causing processing means to carry out a method in accordance with any one of claims 1 to 31 or 65 to 67.

**73.** A storage medium carrying processor implementable instructions for causing processing means to become configured to form apparatus in accordance with any one of claims 36 to 64 or 68 to 70.

**74.** A signal carrying processor implementable instructions for causing processing means to become configured to form apparatus in accordance with any one of claims 36 to 64 or 68 to 70.

**75.** A method of operating an image processing apparatus for processing image data representing images of an object taken from a plurality of different camera positions, the method comprising the steps of:

(a) determining the viewing cone for each camera position;
(b) determining the volume bounded by the intersection of the viewing cones; and
(c) setting the bounded volume as an initial space for use in deriving a representation of a three-dimensional surface of the object using said images.

**76.** An image processing apparatus for processing image data representing images of an object taken from a plurality of different camera positions, the apparatus comprising:

means for determining the viewing cone for each camera position;
means for determining the volume bounded by the intersection of the viewing cones; and
means for setting the bounded volume as an initial space for use in deriving a representation of a three-dimensional surface of the object using said images.

FIG. 1

EP 1 109 131 A2

FIG. 2

DEFINE INITIAL
VOXEL SPACE — S1

DETERMINE VOXELS
DEFINING 3D OBJECT
SURFACE — S2

STORE DEFINED 3D
OBJECT SURFACE — S3

*FIG. 3*

```
       ┌──────────┐
       │          │
       └────┬─────┘
            ▼
   ┌──────────────────┐
   │  ACCESS CAMERA   │
   │ INTERNAL PARAMETERS │──── S11
   │   AND POSITIONS  │
   └────────┬─────────┘
            ▼
   ┌──────────────────┐
   │ DETERMINE VIEWING CONE │──── S12
   │ FOR EACH CAMERA POSITION │
   └────────┬─────────┘
            ▼
   ┌──────────────────┐
   │ DETERMINE THE VOLUME │
   │   BOUNDED BY THE   │
   │ INTERSECTION OF THE │──── S13
   │ VIEWING CONES OF THE │
   │  CAMERA POSITIONS  │
   └────────┬─────────┘
            ▼
   ┌──────────────────┐
   │  SET THE BOUNDED  │
   │ VOLUME AS THE INITIAL │──── S14
   │   VOXEL VOLUME   │
   └────────┬─────────┘
            ▼
   ┌──────────────────┐
   │ DEFINE VOXELS WITHIN THE │
   │ INITIAL VOXEL VOLUME TO │──── S15
   │ PROVIDE INITIAL VOXEL │
   │      SPACE       │
   └────────┬─────────┘
            ▼
       ┌──────────┐
       │          │
       └──────────┘
```

*FIG. 4*

35

DETERMINE FOCAL POINT
FOR CAMERA — S121

DEFINE SIDE LENGTHS AND
LOCATION OF IMAGING AREA — S122

DEFINE STRAIGHT LINES FROM
FOCAL POINT INTERSECTING
CORNERS OF IMAGING AREA AND
PROJECTING BEYOND THE
IMAGING AREA — S123

STORE VOLUME BOUNDED
BY STRAIGHT LINES AS
VIEWING CONE — S124

ANOTHER CAMERA
POSITION? — S125

Y

N

*FIG. 5*

SELECT FIRST AND SECOND
CAMERA VIEWING CONES — S131

DETERMINE PLANES OF
INTERSECTION BETWEEN FIRST
AND SECOND CAMERA VIEWING — S132
CONES

STORE VOLUME BOUNDED BY — S133
PLANES OF INTERSECTION AS
ESTIMATED VOLUME

ANOTHER CAMERA — S134
POSITION?

Y

DETERMINE PLANES OF
INTERSECTION BETWEEN
CURRENT ESTIMATED VOLUME — S135
AND NEXT CAMERA VIEWING
CONE

N

STORE ESTIMATED VOLUME AS
VOLUME BOUNDED BY THE — S136
VIEWING CONES

*FIG. 6*

DIVIDE SPACE CONTAINING INITIAL VOXEL VOLUME INTO VOXELS — S151

DISCARD ANY VOXELS LYING OUTSIDE BOUNDARY OF INITIAL VOXEL VOLUME — S152

DISCARD ANY VOXELS THROUGH WHICH THE BOUNDARY OF THE INITIAL VOXEL VOLUME PASSES — S153

STORE REMAINING VOXELS AS DEFINED INITIAL VOXEL SPACE — S154

FIG. 7

FIG.8

FIG.9

FIG.10a

EP 1 109 131 A2

FIG. 10b

## FIG.11

PERFORM TEST PROCEDURE FOR A FIRST
VOXEL TO DETERMINE WHETHER THAT
S21    VOXEL SHOULD BE RETAINED, REMOVED OR
SUBDIVIDED AND THEN CARRY OUT
APPROPRIATE FURTHER PROCESSING

S22    REPEAT TEST PROCEDURE FOR REMAINING
VOXELS

S24

S23    VOXEL
REMOVED?    Yes    RESET
COUNTERS

No

S26    REPEAT
STEPS S21
S25    ANOTHER SET OF    Yes    TO S25 FOR
CAMERA POSITIONS?    NEXT SET OF
CAMERA
POSITIONS

No

FIG. 12

## FIG.13

Po,o  P6,4  Q  Pn,o

IMC

Po,n  Pn,n

## FIG.16

QS

```
                    ┌──────────────┐
                    │              │
                    └──────┬───────┘
                           │
                           ▼
          ╔═══════════════════════════════════╗        S210
          ║  TEST VOXEL AGAINST IMAGES TO      ║ ╲
          ║  DETERMINE WHETHER THAT VOXEL SHOULD║
          ║  BE RETAINED OR SUBDIVIDED          ║
          ╚═══════════════════════════════════╝
                           │
                           ▼
                      ╱─────────╲      S211              ╔══════════════════════════════╗   S212
                     ╱  RETAIN?  ╲─── No ──────────────▶ ║  SUBDIVISION AND FURTHER      ║ ╲
                     ╲           ╱                        ║  PROCESSING PROCEDURE         ║
                      ╲─────────╱                         ╚══════════════════════════════╝
                           │                                           ▲
                          Yes                                          │
                           │                                          No
                           ▼                                           │
          ╔═══════════════════════════════╗   S213                    │
          ║  TEST CONSISTENCY BETWEEN      ║ ╲                         │
          ║  PROJECTIONS INTO THE DIFFERENT║                           │
          ║  IMAGES                        ║                           │
          ╚═══════════════════════════════╝                    S216   │
                           │                                           │
                           ▼                                     ╱─────────╲
                      ╱─────────╲      S214                     ╱  REMOVE?  ╲
                     ╱ CONSISTENT?╲─── No ──────────────────▶  ╲           ╱
                     ╲           ╱                              ╲─────────╱
                      ╲─────────╱                                    │
                           │                                        Yes    S218
                          Yes                                        │
                           ▼                                         ▼
                    ┌──────────────┐  S217              ┌──────────────┐
                    │ RETAIN VOXEL │ ╲                  │   REMOVE     │
                    │              │                    │   VOXEL      │
                    └──────┬───────┘                    └──────┬───────┘
                           │                                   │
                           ▼                                   ▼
                    ┌──────────────────────────────────────────────┐
                    │                                              │
                    └──────────────────────────────────────────────┘
```

# FIG. 14a

```
                              ┌─────────┐
                              │         │
                              └────┬────┘
                                   ↓
   ┌──────────────────────────────────────────────────────┐
   │ TEST TO SEE IF VOXEL: 1) PROJECTS INTO IMAGE; OR      │        S40
   │ 2) IS OCCLUDED; OR 3) IS PARTIALLY OCCLUDED AND       │
   │ SHOULD BE SUB-DIVIDED                                  │
   └──────────────────────────┬───────────────────────────┘
                                   ↓
   ┌────────────┐               ╱◇╲  S41
   │  IGNORE    │◄──Yes────── ╱OCCLUDED?╲
   │ THAT IMAGE │             ╲         ╱
   │  FOR THAT  │              ╲◇╱
   │   VOXEL    │               │No
   └────────────┘               ↓
      S42                      ╱◇╲  S43
                        ╱ PARTIALLY ╲──────────Yes
                        ╲ OCCLUDED? ╱
                         ╲◇╱
                          │No
                          ↓  S47
   ┌──────────────────────────────────────────┐
   │ PROJECT EACH CORNER OF VOXEL INTO THE     │
   │ IMAGE TO IDENTIFY THE PIXEL PATCH         │
   └──────────────────┬───────────────────────┘
                      ↓  S48
   ┌──────────────────────────────┐
   │ DETERMINE AND STORE COLOUR OF │──────Yes──────→
   │ PIXEL PATCH                   │
   └──────────────┬───────────────┘
                  ↓
               ╱◇╲  S49                        ╱◇╲  S44
        ╱ COLOUR VARIANCE OF PATCH ╲────► ╱ VOXEL SIZE ╲──No
        ╲ EXCEEDS THRESHOLD?       ╱      ╲  = MIN?    ╱
         ╲◇╱                                ╲◇╱
          │No                          Yes │    │No
          ↓  S50                           ↓         ↓
   ┌───────────────┐     ┌───────────────┐  ┌──────────┐
   │ VOXEL TO BE   │     │ IGNORE THAT   │  │ VOXEL TO │
   │ RETAINED      │     │ IMAGE FOR     │  │   BE     │
   └───────┬───────┘     │ THAT VOXEL    │  │SUBDIVIDED│
           │             └───────────────┘  └──────────┘
           │                 S45                 S46
           ↓
   ┌───────────────┐
   │ REPEAT STEPS  │  S51
   │ S40 TO S50    │
   │ FOR EACH      │
   │ REMAINING     │
   │ IMAGE         │
   └───────┬───────┘
           ↓  S52
        ╱◇╲
 ╱ DECISION TO SUBDIVIDE ╲──────Yes
 ╲ FOR AT LEAST ONE IMAGE?╱
  ╲◇╱
   │No  S54                      S53
   ↓                              ↓
┌───────────────┐         ┌──────────┐
│ VOXEL TO BE   │         │ VOXEL TO │
│ RETAINED      │         │   BE     │
└───────┬───────┘         │SUBDIVIDED│
        │                 └─────┬────┘
        └──────────┬────────────┘
                   ↓
              ┌─────────┐
              └─────────┘
```

FIG. 14b

DEFINE STRAIGHT LINE PASSING
THROUGH VOXEL n CENTRE AND
FOCAL POINT OF CAMERA POSITION
FOR THE IMAGE m — S401

S404

S405

VOXEL LYING
ON LINE IS
MARKED AS
PARTIALLY
FULL

VOXEL
OCCLUDED

DO ANY
OTHER VOXELS LIE ON THE
LINE BETWEEN VOXEL n AND
FOCAL POINT? — S402

YES

NO

NO

YES

VOXEL PARTIALLY
OCCLUDED — S406

VOXEL NOT OCCLUDED — S403

FIG. 14c

S510

VOXEL PROJECTS INTO 2 OR MORE IMAGES?

No

Yes

S530

COLOUR DIFFERENCE $\geq \Delta C_{TH1}$?

No

S550

COLOUR DIFFERENCE $\leq \Delta C_{TH2}$?

Yes

No

Yes

S560

VOXEL SIZE = MIN?

Yes

No

S540

REMOVE VOXEL

S570

VOXEL TO BE SUBDIVIDED

S520

VOXEL CONSISTENT

FIG. 14d

MARK ORIGINAL VOXEL AS
PARTIALLY FULL AND RETAIN ———— S260

SUBDIVIDE VOXEL INTO
SUB-VOXELS ———— S261

PERFORM TEST PROCEDURE FOR
SUB-VOXEL TO DETERMINE
WHETHER IT SHOULD BE REMOVED ———— S262
RETAINED OR SUBDIVIDED

REPEAT TEST PROCEDURE FOR
EACH SUB-VOXEL OF THAT VOXEL ———— S263

*FIG. 15*

MARK ORIGINAL VOXEL AS PARTIALLY
FULL AND RETAIN — S260

SUBDIVIDE VOXEL INTO
SUB-VOXELS — S261

PROJECT SUB-VOXEL i INTO PIXEL
PATCH IN IMAGE m — S264

DETERMINE AND STORE COLOUR OF PIXEL
PATCH FOR SUB-VOXEL IN IMAGE m — S265

S264
m = M?    NO →    S267
m = m + 1

YES

S271
i = I?    NO →    S272
i = i + 1

YES

COMPARE THE DETERMINED COLOURS
OF THE PIXEL PATCHES — S273

IS THERE A SET OF
PIXEL PATCHES
CONSISTING OF A PIXEL
PATCH FOR EACH IMAGE
FOR WHICH THE COLOUR
DIFFERENCE IS
$\leq \Delta C_{TH}$? — S274    NO →    S275
REMOVE VOXEL

YES

RETAIN VOXEL — S276

*FIG. 17*

FIG. 18

*FIG.19*

B(o,o,x)

M(x,o,x)

W(x,x,x)

K(o,o,o)

G(o,x,o)

R(x,o,o)

Y(x,x,o)

*FIG.20*

M(x,o,x)

| | | | | | | | |
|---|---|---|---|---|---|---|---|
| | | | | | | | |
| | | | | | | | |
| | | | | 1 | | | |
| | | | | | | | QU |
| | | | | | | | |
| | 2 | | | | | | |
| 1 | 1 | | | 1 | | | |

R(x,o,o)

Y(x,x,o)

```
                    ┌──────────────┐
                    │              │
                    └──────┬───────┘
                           │
                           ▼
        ┌──────────────────────────────────┐
        │  SELECT A FIRST SET OF IMAGES     │──── S300
        └──────────────┬───────────────────┘
                       │
                       ▼
        ┌──────────────────────────────────┐
        │  PERFORM VOXEL COLOURING PROCESS  │──── S301
        │  USING THE FIRST SET OF IMAGES    │
        └──────────────┬───────────────────┘
                       │
                       ▼
        ┌──────────────────────────────────┐
        │  STORE CURRENT VOXEL SPACE WITH   │
        │  DETERMINED COLOUR FOR EACH       │──── S302
        │  PHOTOCONSISTENT UNOCCLUDED VOXEL │
        └──────────────┬───────────────────┘
                       │
                       ▼
        ┌──────────────────────────────────┐
        │  SELECT NEW IMAGE IN              │──── S303
        │  PLACE OF PREVIOUS IMAGE(S)       │
        └──────────────┬───────────────────┘
                       │
                       ▼
        ┌──────────────────────────────────┐
        │  PERFORM VOXEL COLOURING          │──── S301a
        │  PROCESS USING CURRENT VOXEL      │
        │  SPACE AND NEW IMAGE              │
        └──────────────┬───────────────────┘
```

INCREASE ALLOWABLE COLOUR DIFFERENCE $\Delta C_{TH}$ — S305

3D OBJECT SURFACE ACCEPTABLE? — S304

NO   YES

STORE NEW VOXEL SPACE AS CURRENT VOXEL SPACE WITH DETERMINED COLOUR FOR EACH PHOTOCONSISTENT UNOCCLUDED VOXEL — S306

ANOTHER IMAGE AVAILABLE? — S307

NO   YES

*FIG. 21*

PROJECT VOXEL n INTO PIXEL PATCH IN NEW IMAGE — S221

YES

DETERMINE PIXEL PATCH COLOUR AND STORE — S223

COMPARE COLOUR OF PIXEL PATCH WITH COLOUR OF THE VOXEL IN THE CURRENT VOXEL SPACE — S224

S225

COLOUR DIFFERENCE ≤ $\Delta C_{TH}$ ?

S226

REMOVE VOXEL

YES

RETAIN VOXEL — S227

Ⓒ

S228

n = N?

NO

S229

n = n + 1

YES

Ⓔ

Ⓓ

*FIG. 22a*

Ⓔ

| VOXEL SWEEP COMPLETED | S230 |

VOXEL REMOVED
IN SWEEP? — S231

YES → RESET n AND m FOR REMAINING VOXELS — S232 → Ⓓ

N

OTHER SET OF
CAMERA POSITIONS
TO BE CONSIDERED — S233

YES → REPEAT STEPS S221 TO S233 FOR NEXT SET OF CAMERAS — S234

NO

*FIG. 22b*

```
                    ┌─────────────┐
                    │             │
                    └─────────────┘
                           │
                           ▼
          ┌──────────────────────────────┐
          │     SELECT AND STORE A         │──── S300
          │     FIRST SET OF IMAGES        │
          └──────────────────────────────┘
                           │
                           ▼
          ┌──────────────────────────────┐
          │  PERFORM VOXEL COLOURING PROCESS │──── S301
          │  USING THE FIRST SET OF IMAGES   │
          └──────────────────────────────┘
                           │
                           ▼
          ┌──────────────────────────────┐
          │  STORE CURRENT VOXEL SPACE WITH  │
          │  DETERMINED COLOUR FOR EACH      │──── S302
          │  PHOTOCONSISTENT UNOCCLUDED VOXEL│
          └──────────────────────────────┘
                           │
                           ▼
          ┌──────────────────────────────┐
          │ SELECT AND STORE NEW IMAGE TOGETHER │
          │ WITH X OF THE PREVIOUS IMAGES AS NEW │──── S303a
          │ SET OF IMAGES.  DISCARD ALL OTHER    │
          │ PREVIOUS IMAGES                      │
          └──────────────────────────────┘
                           │
                           ▼
          ┌──────────────────────────────┐
          │   PERFORM VOXEL COLOURING        │
          │   PROCESS USING CURRENT VOXEL    │──── S301b
          │   SPACE AND NEW SET OF IMAGES    │
          └──────────────────────────────┘
                           │
                           ▼
```

INCREASE ALLOWABLE COLOUR THRESHOLD DIFFERENCE $\triangle C_{TH}$ — S305

DID VOXEL COLOURING PROCESS CONVERGE TO 3D OBJECT SURFACE? — S304

NO

YES

STORE CURRENT VOXEL SPACE WITH DETERMINED COLOUR FOR EACH PHOTOCONSISTENT UNOCCLUDED VOXEL — S306

S307

ANOTHER IMAGE AVAILABLE?

NO

YES

*FIG. 23*

PROJECT VOXEL n INTO PIXEL
PATCH IN A FIRST ONE OF
THE NEW SET OF IMAGES — S221a

DETERMINE AND STORE
COLOUR OF PIXEL PATCH — S222a

VOXEL n PROJECTED
INTO EACH OF THE NEW
SET OF IMAGES? — S223a

NO → PROJECT VOXEL n INTO
THE NEXT ONE OF THE
NEW SET OF IMAGES — S223b

YES

VOXEL n PROJECTS INTO
AT LEAST ONE OF THE
NEW SET OF IMAGES? — S224a

NO → X

YES

COMPARE THE COLOURS OF THE PIXEL
PATCHES FOR THE ONES OF THE NEW
SET OF IMAGES INTO WHICH THE VOXEL n
PROJECTS AND THE COLOUR
ASSOCIATED WITH THAT VOXEL IN THE
CURRENT VOXEL VOLUME — S224b

Y

B

*FIG. 24a*

S225

COLOUR
DIFFERENCE
$\leq \triangle C_{TH}$

NO → REMOVE VOXEL n — S226

X → YES

RETAIN
VOXEL n

S227

S228

n = N?

NO → n = n + 1 — S229 → B

YES

VOXEL SWEEP
COMPLETED — S230

S231

VOXEL
REMOVED IN
SWEEP?

→ RESET n AND m
FOR REMAINING
VOXELS — S232 → B

S233

ANOTHER
SET OF
CAMERAS?

YES → REPEAT STEPS S221a
TO S233 FOR NEXT
SET OF CAMERAS — S234

NO

FIG. 24b

FIG. 25